(19) Europäisches Patentamt
European Patent Office
Office européen des brevets

(11) **EP 3 792 300 A1**

(12) **EUROPEAN PATENT APPLICATION**
published in accordance with Art. 153(4) EPC

(43) Date of publication:
**17.03.2021 Bulletin 2021/11**

(21) Application number: **19802843.3**

(22) Date of filing: **17.05.2019**

(51) Int Cl.:
***C08J 7/00*** *(2006.01)* ***C08J 7/04*** *(2020.01)*
***C23C 18/20*** *(2006.01)*

(86) International application number:
**PCT/JP2019/019815**

(87) International publication number:
**WO 2019/221300 (21.11.2019 Gazette 2019/47)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **18.05.2018 JP 2018096676**
**18.05.2018 JP 2018096677**

(71) Applicant: **Osaka University**
**Suita-shi, Osaka 565-0871 (JP)**

(72) Inventors:
- **ASOH, Taka-Aki**
**Suita-shi, Osaka 565-0871 (JP)**
- **ASAHARA, Haruyasu**
**Suita-shi, Osaka 565-0871 (JP)**
- **INOUE, Tsuyoshi**
**Suita-shi, Osaka 565-0871 (JP)**
- **UYAMA, Hiroshi**
**Suita-shi, Osaka 565-0871 (JP)**
- **OHKUBO, Kei**
**Suita-shi, Osaka 565-0871 (JP)**

(74) Representative: **J A Kemp LLP**
**14 South Square**
**Gray's Inn**
**London WC1R 5JJ (GB)**

(54) **PROCESSED-POLYMER-PRODUCT PRODUCTION METHOD, POLYMER, METAL-PLATED POLYMER, AND BONDED LAMINATE**

(57) To provide a treated polymer production method which can be performed in a simplified manner and at low cost. In order to achieve the object, the treated polymer production method according to the present invention includes: reacting a surface of a polymer with a halogen oxide radical to surface-treat the polymer. The treated polymer is a metal-plated polymer, and the method further includes plating, with a metal, the surface of the polymer after the surface-treating, or the treated polymer is an adhesion laminate of the polymer and an adherend, and the method further includes adhering the adherend to the surface of the polymer after the surface-treating.

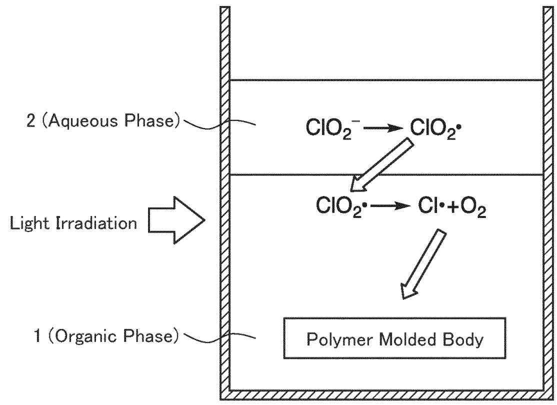


FIG. 1

EP 3 792 300 A1

## Description

### TECHNICAL FIELD

The present invention relates to a treated polymer production method, a polymer, a metal-plated polymer, and an adhesion laminate.

### BACKGROUND ART

In order to plate the surface of a polymer with a metal, the polymer is surface-treated (subjected to surface alteration) in advance. For example, it has been proposed to introduce a surfactant on a surface of the polymer (plastic), remove the surfactant with supercritical carbon dioxide (high-pressure fluid), and then plate (Patent Document 1). It has also been proposed to surface-treat a polymer with high-pressure carbon dioxide in the same manner and then plating (Patent Literature 2).

In adhesion of the polymer with an adherend, the polymer has been treated to enhance its adhesiveness in advance (e.g., Patent Literatures 3 and 4)

### Citation List

#### Patent Literatures

Patent Literature 1: JP 2008-247962 A
Patent Literature 2: JP 2010-046952 A
Patent Literature 3: JP 2012-251038 A
Patent Literature 4: JP 2013-091702 A

### SUMMARY OF INVENTION

#### Technical Problem

However, the methods of Patent Literatures 1 and 2 require high-pressure carbon dioxide, thereby lacking versatility.

Examples of the surface treatment (surface alteration) of the polymer include physical treatments such as a corona discharge treatment, a plasma discharge treatment, and a grafting treatment. However, these treatments involve problems of a complicated operation, treatment costs, and difficulty in reaction control. On the other hand, a chemical surface treatment includes a method using a heavy metal oxidizing agent. However, this method also involves problems of costs of the treatment with the heavy metal oxidizing agent. Further, both of the physical and chemical treatments involve a problem of versatility as in the treatments of Patent Literatures 1 and 2, and in particular, it is difficult to apply these treatments to bioplastics such as polylactic acid (PLA).

The method of Patent Literatures 3 and 4 uses a modified polymer. This method requires a specific treatment at the stage of polymer synthesis, and thus has a limitation in application range. For example, this method is not applicable to bioplastics such as polylactic acid (PLA). Other methods of enhancing the adhesiveness of the polymer include the surface alteration treatment, which involves the aforementioned problems.

Hence, the present invention is intended to provide a surface-treated polymer production method which can be performed in a simplified manner and at low cost, and a polymer, a metal-plated polymer, and an adhesion laminate each of which can be produced in a simplified manner and at low cost.

#### Solution to Problem

In order to achieve the object, the treated polymer production method according to the present invention includes: reacting a surface of a polymer with a halogen oxide radical to surface-treat the polymer. The treated polymer is a metal-plated polymer, and the method further includes plating, with a metal, the surface of the polymer after the surface-treating, or the treated polymer is an adhesion laminate of the polymer and an adherend, and the method further includes adhering the adherend to the surface of the polymer after the surface-treating.

The polymer according to the present invention has an oxidized surface, and an amount of change X in contact angle with water represented by the following mathematical formula (1) of more than 0°,

$$X = A_0 - A \quad (1)$$

Ao: a contact angle of a non-oxidized surface of the polymer with water;
A: a contact angle of the oxidized surface of the polymer with water;
X: an amount of change in contact angle with water.

The metal-plated polymer according to the present invention includes: the polymer according to the present invention, the polymer having a metal-plated surface.
The adhesion laminate according to the present invention includes: an adhesion laminate producing polymer of the polymer according to the present invention and an adherend; and the adherend adhered to a surface of the adhesion laminate producing polymer.

Advantageous Effects of Invention

The present invention can provide a surface-treated polymer production method which can be performed in a simplified manner and at low cost, and a polymer, a metal-plated polymer, and an adhesion laminate, each of which can be produced in a simplified manner and at low cost.

BRIEF DESCRIPTION OF DRAWINGS

[FIG. 1] FIG. 1 is a view schematically illustrating an example of surface-treating in the production method according to the present invention.
[FIG. 2] FIGS. 2A and 2B are graphs illustrating results of IR spectroscopy of Reference Example A1.
[FIG. 3] FIG. 3 is a cross-sectional view schematically illustrating the state of surface-treating in Reference Example B1.
[FIG. 4] FIG. 4 is a perspective view illustrating a configuration of a reaction system of Reference Example B7.
[FIG. 5] FIGS. 5A and 5B are drawings illustrating overall configurations of a reaction container and a plate in Reference Example B10.
[FIG. 6] FIG. 6 is a photograph showing a result of coloration in Reference Example B10.
[FIG. 7] FIG. 7 is a photograph of a metal-plated polymer of Example 1.
[FIG. 8] FIG. 8 is a perspective view illustrating a configuration of an adhesion laminate of Example 5.
[FIG. 9] FIG. 9 is a perspective view illustrating a configuration of an adhesion laminate of Example 6.
[FIG. 10] FIG. 10 is a cross-sectional view illustrating a configuration of a reaction system of Reference Example B14.

DESCRIPTION OF EMBODIMENTS

The present invention will be described below in more detail with reference to illustrative examples. The present invention, however, is by no means limited thereby.
Herein, the method for producing a treated polymer according to the present invention (the treated polymer production method according to the present invention) may be merely referred to as the "production method according to the present invention." In the treated polymer production method according to the present invention, a treated polymer to be produced is, as mentioned above, a metal-plated polymer or an adhesion laminate of the polymer and an adherend.
The treated polymer production method according to the present invention may be, for example, a method for producing a metal-plated polymer, including reacting a surface of a polymer with a halogen oxide radical, and plating, with a metal, the surface of the polymer after the surface-treating. Herein, this method may also be referred to as the "metal-plated polymer production method according to the present invention." The method for producing a metal-plated polymer according to the present invention (metal-plated polymer production method according to the present invention) can also be referred to as a method for metal-plating the polymer (a metal-plating method of the polymer).
The treated polymer production method according to the present invention may be, for example, a method for producing an adhesion laminate of a polymer and an adherend, including: reacting a surface of the polymer with a halogen oxide radical to surface-treat the polymer; and adhering the adherend to the surface of the polymer after the surface-treating. Herein, this method may also be referred to as the "adhesion laminate production method according to the present invention." The method for producing an adhesion laminate of a polymer and an adherend according to the present invention (adhesion laminate production method according to the present invention) can also be referred to

as a method for adhering the polymer to the adherend. The adherend may be, for example, a metal.

The polymer according to the present invention is a polymer for producing a metal-plated polymer or an adhesion laminate of the polymer and an adherend, as mentioned above. Herein, the polymer according to the present invention, for use in metal plating is also referred to as the "metal plating polymer according to the present invention" or the "metal plating polymer." Further, hereinafter, the metal-plated polymer according to the present invention is also merely referred to as the "metal-plated polymer." Herein, the polymer according to the present invention, for use in production of an adhesion laminate of a polymer and an adherend is also referred to as the "adhesion laminate producing polymer according to the present invention" or the "adhesion laminate producing polymer." Further, herein, the adhesion laminate of a polymer and an adherend according to the present invention is also referred to as the "adhesion laminate according to the present invention" or merely the "adhesion laminate."

In the present invention, the polymer can be altered by the surface-treating. Herein, the surface-treating may also be referred to as a "alteration treatment" or a "alternation method." The surface-treating including oxidizing the polymer can be referred to as a method for oxidizing the polymer.

In the treated polymer production method according to the present invention, a reaction system in the surface-treating may be either a gas reaction system or a liquid reaction system, for example.

In the treated polymer production method according to the present invention, the halogen oxide radical may be, for example, a chlorine dioxide radical.

In the present invention, an open chain compound (e.g., an alkane, an unsaturated aliphatic hydrocarbon) or a chain substituent derived from the open chain compound (e.g., an alkyl, a hydrocarbon group such as an unsaturated aliphatic hydrocarbon group) may be, for example, of a straight-chain or branched, and the carbon number is, as a non-limiting example, 1 to 40, 1 to 32, 1 to 24, 1 to 18. 1 to 12, 1 to 6, or 1 to 2, and in the case of the unsaturated hydrocarbon group, 2 to 40, 2 to 32, 2 to 24, 2 to 18, 2 to 12, or 2 to 6. In the present invention, the number of ring members (the number of atoms constituting the ring) of a cyclic compound (e.g., a cyclic saturated hydrocarbon, a non-aromatic cyclic unsaturated hydrocarbon, an aromatic hydrocarbon, a heteroaromatic compound) or a cyclic group derived from the cyclic compound (e.g., a cyclic saturated hydrocarbon group, a non-aromatic cyclic unsaturated hydrocarbon group, an aryl, a heteroaryl) is, as a non-limiting example, 5 to 32, 5 to 24, 6 to 18, 6 to 12, or 6 to 10. In addition, in the case in which the substituent has an isomer thereof, the kind of the isomer is, as a non-limiting specific example, a 1-naphthyl or a 2-naphthyl when merely referred to as a "naphthyl."

In the present invention, non-limiting examples of the salt include an acid addition salt and a base addition salt. The acid forming the acid addition salt may be, for example, an inorganic acid or an organic acid, and the base forming the base addition salt may be, for example, an inorganic base or an organic base. Non-limiting examples of the inorganic acid include sulfuric acid, phosphoric acid, hydrofluoric acid, hydrochloric acid, hydrobromic acid, hydroiodic acid, hypofluorous acid, hypochlorous acid, hypobromous acid, hypoiodous acid, fluorous acid, chlorous acid, bromous acid, iodous acid, fluorine acid, chloric acid, bromic acid, iodine acid, perfluoric acid, perchloric acid, perbromic acid, and periodic acid. Non-limiting examples of the organic acid include p-toluenesulfonic acid, methanesulfonic acid, oxalic acid, p-bromobenzenesulfonic acid, carbonic acid, succinic acid, citric acid, benzoic acid, and acetic acid. Non-limiting examples of the inorganic base include ammonium hydroxide, alkali metal hydroxide, alkaline-earth metal hydroxide, carbonate, and bicarbonate, and specific examples thereof include sodium hydroxide, potassium hydroxide, potassium carbonate, sodium carbonate, sodium bicarbonate, potassium hydrogen carbonate, calcium hydroxide, and calcium carbonate. Non-limiting examples of the organic base include ethanol amine, triethylamine, and tris(hydroxymethyl)aminomethane.

An embodiment of the present invention will be described below in more detail with reference to illustrative examples. The present invention, however, is by no means limited thereby.

(1) Polymer

Non-limiting examples of the form of the polymer include a solid form, a crystalline form, and an amorphous form, or an unmolded body and a molded body. The unmolded body is, for example, a polymer itself. The molded body is, for example, a molded body molded from the polymer. In the present invention, for example, an unmolded body may be molded after altering it in the surface-treating, or a molded body obtained by molding a polymer may be altered. The kind of polymer contained in the polymer is, as a non-limiting example, one, or a mixture of two or more kinds. The polymer may be, for example, a polymer alloy or a polymer compound. The polymer may be, for example, a composite material containing a material other than the polymer. Non-limiting examples of the other material include materials contained in commonly used polymers, an inorganic substance, and an organic substance. Examples of the inorganic substance include calcium carbonate, clay, talc, carbon fibers, glass fibers, aramid fibers, silicone, and zinc oxide. The other material may also be, for example, an additive such as a flame retardant and an antistatic agent.

Non-limiting examples of the solid polymer, the crystalline polymer, and the amorphous polymer include a polymer having a melting point of room temperature or higher, a polymer which is solid, crystalline, or amorphous at

room temperature, and a polymer which is solid, crystalline, or amorphous at 0°C or higher. If the polymer has a glass-transition temperature, the glass-transition temperature is, as a non-limiting example, -150°C or more. The polymer may have a relatively high degree of crystallinity, for example. The polymer having a melting point of the above-mentioned condition has the degree of crystallinity of, for example, 20% or higher, 30% or higher, or 35% or higher. A molded body of the polymer can be obtained by a known molding method of melting by heating, shaping, and cooling, for example. In the present invention, the polymer may be, for example, a polymer having fluidity or a semisolid polymer. For example, in the plating or the adhering, the polymer may be brought into a semisolid state or a state having fluidity by heating or the like, and the polymer may be solid or amorphous without heating.

The form of the polymer may be selected, as appropriate, according to, for example, the application, use, and the like after alteration and after production of the treated polymer.

The kind of the polymer to be treated is not particularly limited. The surface-treating may modify the polymer to be treated as mentioned above. The surface-treating may change, for example, the side chain or main chain (straight chain) of the polymer. The change of the main chain may be, for example, a change of the end or the inside of the main chain. Examples of the change (also referred to as modification) include oxidation and halogenation. The side chain is a chain (branched chain) branched from the main chain. Specifically, for example, the main chain is a chain of carbon atoms and/or hetero atoms, and the side chain is a chain linked to any of the carbon atoms or hetero atoms constituting the main chain and is branched from the main chain.

As a non-limiting example, the polymerized form of the polymer may be a homopolymer or a copolymer. Non-limiting examples of the copolymer include a random copolymer, an alternating copolymer, a block copolymer, and a graft copolymer. The copolymer uses two or more kinds of repeating unit (monomer), for example. Further, the polymer may be, for example, a linear polymer, a branched polymer, or a network polymer.

In a preferred embodiment, the polymer contains carbon and hydrogen and has a carbon-hydrogen bond, for example. The surface-treating alters (e.g., oxidizes) the carbon-hydrogen bond in the polymer, for example. Non-limiting specific examples of the polymer include a Polymer A, which will be described later, and, in addition, perfluoroalkoxyalkane polymers, perfluoroethylene propene copolymers, ethylene tetrafluoroethylene copolymers, polyvinylidene fluoride, and polychlorotrifluoroethylene.

The polyolefin may be, for example, a polymer (polyolefin) of olefin monomers with a carbon number of 2 to 20. Examples of the polyolefin include polyethylenes (PE) such as low-density polyethylene and high-density polyethylene, and polypropylene (PP). The polyolefin may be, for example, a copolymer.

The polymer having a side chain to be altered may be, for example, a polymer having, as a side chain, a hydrogen group, a hydrocarbon group, or a derivative group thereof. Further, the polymer having a side chain to be altered is not limited to these, and may be, for example, a - polymer having, as a side chain, any group (e.g., fluoro). In the present invention, "a polymer having a side chain to be altered" is hereinafter formally also referred to as "polymer A."

Non-limiting specific examples of the polymer A having a side chain to be altered include: the polyolefin (e.g., polyethylene (PE) such as low-density polyethylene and high density polyethylene, and polypropylene (PP)), polyvinyl chloride, polystyrene, polylactic acid, polyhydroxy butyric acid, a silicone polymer, natural rubber, a phenolic resin, an epoxy resin, a diallyl phthalate resin, polycarbonate (PC), polymethylmethacrylate (PMMA), polydimethylsiloxane (PDMS), polyarylate such as amorphous polyarylate, polyether sulfone, polyparaphenylene vinylene, polythiophene, polyfluorene, polyphenylene sulfide (PPS), liquid crystalline polyester, polyparaphenylene (PPP), a composite (PEDOT/PSS) of poly(3,4-ethylenedioxythiophene) (PEDOT) and polystyrene sulfonic acid (PSS), polyaniline/polystyrene sulfonic acid, poly(3-hydroxy alkanoic acid), polyvinylidene chloride, a styrene copolymer (e.g., an acrylonitrile-butadiene-styrene copolymer (ABS), an acrylonitrile-styrene copolymer resin (AS), a styrene-butadiene copolymer), a methacrylic resin, polyimide, polyetherimide, poly(trans-1,4-isoprene), an urea resin, polyester (e.g., polyethylene terephthalate (PET), polybutylene terephthalate (PBT), polycaprolactone), polyamide (e.g., nylon (trade name)), polyether ether ketone, a cyclic cycloolefin polymer, polyethylene oxide, polypropylene oxide, polyacetal, a fluorine-containing polymer (e.g., Teflon (trade name), fluorine-containing synthetic rubber), and a protein (e.g., fibronectin, albumin, fibrin, keratin, cytochrome, cytokine).

As a non-limiting example, the polmerized form of the polymer A may be the same as mentioned for the polymer. For the homopolymer, the repeating unit (monomer) forming a straight chain has a side chain, for example. For the copolymer, as each repeating unit (each monomer) forming a straight chain, one kind of monomer has a side chain, or two or more kinds of monomers may each have a side chain, for example.

Non-limiting examples of the hydrogen group, the hydrocarbon group, and a derivative group thereof which is a side chain of the polymer A include monads of the following hydrocarbon groups and the derivatives thereof. The hydrocarbon may be, for example, non-aromatic or aromatic, and saturated or unsaturated. Specifically, the hydrocarbon may be, for example, a straight-chain or branched, saturated or unsaturated hydrocarbon (e.g., a straight-chain or branched alkane, straight-chain or branched alkene, a straight-chain or branched alkyne). The hydrocarbon may also be, for example, a saturated or unsaturated hydrocarbon comprising a non-aromatic cyclic structure (e.g., cycloalkane, cycloalkene). The hydrocarbon may be an aromatic hydrocarbon. The hydrocarbon may or may not have, for example,

one or more aromatic or non-aromatic rings, respectively, in its structure. The hydrocarbon may or may not have, for example, one or more hydrocarbon groups of a straight-chain or branched, saturated or unsaturated hydrocarbon, in its structure. The derivative of the unsaturated hydrocarbon may be, for example, a ketone, an ester, or an amide each having a carbonyl (-C(=O)-). Non-limiting examples of the carbon number of the hydrocarbon include 1 to 40, 1 to 32, 1 to 24, 1 to 18, 1 to 12, 1 to 6, and 1 to 2, and if the hydrocarbon is unsaturated hydrocarbon, the carbon number is, for example, 2 to 40, 2 to 32, 2 to 24, 2 to 18, 2 to 12, and 2 to 6. Specific examples of the hydrocarbon include methyl, ethyl, propyl, n-butyl, tert-butyl, n-pentyl, n-hexyl, vinyl, allyl, 1,3-butadiene-1-yl, ethynyl, cyclopentyl, cyclohexyl, cycloheptyl, cyclooctyl, methycyclohexyl, cyclohexenyl, phenyl, o-tolyl, m-tolyl, p-tolyl, 2,3-xylyl, 2,4-xylyl, 2,5-xylyl, 2,6-xylyl, 3,4-xylyl, 3,5-xylyl, mesityl, 1,2,4,5-tetramethylphenyl, biphenyl, 1-naphthyl, 2-naphthyl, methyl-1-naphthyl, methyl-2-naphthyl, anthryl, phenanthryl, pyrenyl, and styryl.

A "derivative" of the hydrocarbon is, for example, an organic compound containing a hetero element (an element other than carbon and hydrogen). Non-limiting examples of the hetero element include oxygen (O), nitrogen (N), sulfur (S), and halogen. Examples of the halogen include fluorine (F), chlorine (C1), bromine (Br), and iodine (I) The derivative may be, for example, an organic compound having a structure in which a hydrocarbon group is bonded to any substituent or any atomic group. The derivative may be, for example, a compound having a structure in which a plurality of hydrocarbon groups are bonded by any atomic groups, and the hydrocarbon groups may or may not e substituted with one or more substituents Non-limiting examples of the hydrocarbon group include monovalent or bivalent groups in each of which hydrogen atoms of one of more hydrocarbons are relaced with atomic bonding. In the hydrocarbon group, one or more carbon atoms may be replaced with hetero atoms, for example. Specifically, for example, one carbon atom (and hydrogen atoms bonded thereto) of a phenyl may be substituted with a nitrogen atom to form a pyridyl. Non-limiting examples of the substituent or atomic group include hydroxy, halogen (fluoro, chloro, bromo, iodo), alkoxy, aryloxy (e.g., phenoxy), carboxy, alkoxycarbonyl, aryloxycarbonyl (e.g., phenoxycarbonyl), mercapto, alkylthio, arylthio (e.g., phenylthio), amino with or without substituent (e.g., amino, alkylamino, dialkylamino), an ether bond (-O-), an ester bond (-CO-O-), and a thioether bond (-S-).

In the present invention, when the polymer is the molded body, the surface-treating may be performed, for example, in the liquid reaction system (liquid phase) or in the gas reaction system (gas phase). For the polymer which is easily soluble in a liquid medium, the gas phase reaction system is preferred, for example. When the polymer is the molded body, for example, how to mold, the shape of the molded body, and the like are not limited in any way. Non-limiting examples of how to mold include known methods such as compression molding, transfer molding, extrusion molding, calendar molding, inflation molding, blow molding, vacuum molding, and injection molding. Non-limiting examples of the shape of the molded body include desired shapes (e.g., a sheet, a film, a plate, a tube, a pipe, a bar, a bead, a block). The molded body of the polymer may be, for example, a non-porous body, a porous body, a nonwoven fabric, or a woven fabric. For treating the molded body, the shape of the molded body is not limited in any way, for example, and may be, for example, a molded body having an exposed surface. Specifically, for example, the molded body is preferably a molded body having an exposed surface which can be in contact with the reaction system in the surface-treating. Non-limiting examples of the exposed surface of the molded body include a surface exposed to the outside, and a surface exposed to the inside, such as a tube and a porous body. For the polymer being the molded body, the surface-treating may also be referred to as alteraion of the surface in the molded body of the polymer, for example.

In the present invention, when the polymer is the unmolded body, the surface-treating may be performed, for example, in the liquid reaction system (liquid phase) or in the gas reaction system (gas phase). For the surface-treating in the liquid phase, a component involved in a reaction (e.g., a radical), which will be described later, is preferably present in the liquid phase, for example. For the surface-treating in the gas phase, a component involved in the reaction is preferably present in a state of gas or mist in the gas phase, for example. For the solid polymer which is easily dissolved in a liquid medium, the solid polymer is preferably treated in the gas phase reaction system, for example.

(2) Halogen Oxide Radical

In the present invention, the halogen oxide radical is contained in a reaction system for the surface-treating. For example, the halogen oxide radical may be contained in the reaction system by generating in the reaction system or by adding, to the reaction system, the halogen oxide radical generated separately. How to generate the halogen oxide radical is not particularly limited. A specific example of the generation of the halogen oxide radical will be described later.

For example, as the halogen oxide radical, any one of them may be used, or two or more of them may be used in combination. The halogen oxide radical may be appropriately selected, for example, depending on the type of the polymer to be altered, the reaction conditions, and any other parameters.

Examples of the halogen oxide radical include halogen oxide radicals such as $F_2O$• (oxygen difluoride radical), $F_2O_2$• (dioxygen difluoride radical), $ClO_2$• (chlorine dioxide radical), $BrO_2$• (bromine dioxide radical), and $I_2O_5$• (iodine (V) oxide).

(3) Reaction System

The reaction system in the surface-treating contains the polymer and the halogen oxide radical. The reaction system may be, for example, either a gas reaction system or a liquid reaction system, as mentioned above. In the surface-treating, the reaction system may or may not be irradiated with light, for example. Specifically, the polymer and the halogen oxide radical can be reacted with each other without irradiating the polymer with light. No irradiation of the polymer with light allows safety to be improved, and costs to be reduced, for example. For example, a halogen oxide radical may be generated by light irradiation in a radical generation reaction system which is different from the reaction system of the surface-treating so as not to irradiate the reaction system of the surface-treating with light. Note that how to generate the halogen oxide radical itself is not particularly limited as mentioned above, and the halogen oxide radical may be generated without light irradiation. In the present invention, "no light irradiation" for the reaction system and derivatives thereof includes, but is not limited to, blocking light for preventing light entering the reaction system. In the present invention, "no light irradiation" for the reaction system and derivatives thereof may or may not include blocking light for preventing light entering the reaction system, for example. In the present invention, "no light irradiation" for the reaction system and derivatives thereof may include the state where natural light or room light enters the reaction system in the state where the reaction system is not actively irradiated with light using a light source, for example. For example, no irradiation of the reaction system with light allows the reaction to be performed in a simplified manner and at low cost.

(3A) Gas Reaction System

For the reaction system being a gas reaction system, for example, the polymer may be placed in the gas reaction system containing the halogen oxide radical, which is then irradiated with light. However, in the present invention, the surface-treating is not limited to this. For example, if the surface of the polymer can be reacted with the halogen oxide radical, the surface-treating may be performed without light irradiation. The gas reaction system may contain the radical, for example, and non-limiting examples of the kind of the gas phase in the gas reaction system include air, nitrogen, noble gas, and oxygen.

In the present invention, for example, the halogen oxide radical may be introduced or generated in the gas reaction system prior to or in parallel to the surface-treating. In the former case, for example, a gas containing the halogen oxide radical may be introduced into the gas phase. In the latter case, for example, as will be described later, the halogen oxide radical generated in the radical generation reaction system in a liquid phase may be introduced by transferring the halogen oxide radical to a gas phase.

As a specific example, for the halogen oxide radical being the chlorine dioxide radical, for example, the chlorine dioxide radical may be present in the gas phase by introducing a chlorine dioxide gas into the gas phase. The chlorine dioxide radical may be generated in the gas phase by an electrochemical method, for example.

(3B) Liquid Reaction System

For the reaction system being the liquid reaction system, the liquid reaction system contains an organic phase, for example. The liquid reaction system may be a single-phase reaction system containing only the organic phase, or a double-phase reaction system containing the organic phase and an aqueous phase, for example. For the single-phase reaction system containing only the organic phase, for example, as will be described later, an aqueous phase containing a source of the halogen oxide radical may be prepared separately to generate the halogen oxide radical in the aqueous phase, the organic phase may then be mixed with the aqueous phase to dissolve (extract) in the organic phase, the halogen oxide radical generated in the aqueous phase.

(3B-1) Organic Phase

The organic phase contains the polymer placed therein, as mentioned above, and is, for example, a phase of an organic solvent containing the halogen oxide radical and the polymer placed therein.

The organic solvent is not particularly limited. As the organic solvent, one kind may be used, or a plurality of kinds may be used in combination, for example. In the present invention, examples of the organic solvent include a halogenated solvent and a fluorous solvent, as mentioned above. For the liquid reaction system being the double-phase reaction system, the organic solvent is, for example, preferably, a solvent capable of forming the double-phase system, i.e., a solvent which separates from the aqueous solvent, which will be described later, constituting the aqueous phase, or a solvent slightly soluble or insoluble in the aqueous solvent.

The "halogenated solvent" refers to a solvent in which all or most of hydrogen atoms of hydrocarbon have been substituted with halogen, for example. The halogenated solvent may be, for example, a solvent in which 50% or more, 60% or more, 70% or more, 80% or more, or 90% or more of hydrogen atoms of the hydrocarbon are substituted with

halogen. Non-limiting examples of the halogenated solvent include methylene chloride, chloroform, carbon tetrachloride, carbon tetrabromide, and a fluorous solvent, which will be described later.

The "fluorous solvent" is a kind of the halogenated solvent, and refers to a solvent in which all or most of hydrogen atoms of hydrocarbon are substituted with fluorine atoms, for example. The fluorous solvent may be, for example, a solvent in which 50% or more, 60% or more, 70% or more, 80% or more, or 90% or more of hydrogen atoms of hydrocarbon are substituted with fluorine atoms. In the present invention, the use of the fluorous solvent is advantageous in reducing or preventing side reactions due to the low reactivity of the fluorous solvent itself, for example. Examples of the side reactions include an oxidation of the solvent, a hydrogen abstraction reaction of the solvent with the radical, halogenation (e.g., chlorination), and a reaction of a radical derived from a raw material compound and the solvent (e.g., a reaction of an ethyl radical and the solvent, for the hydrocarbon group in the side chain or at the terminal of the polymer being an ethyl group). The fluorous solvent is suitable for forming the double-phase reaction system due to its low miscibility with water.

Examples of the fluorous solvent include solvents represented by the following chemical formulae (F1) to (F6). Among them, the fluorous solvent is, for example, preferably $CF_3(CF_2)_4CF_3$ having the following chemical formula (F1) where n = 4.

$F_3C-(CF_2)_n-CF_3$

n=4, Boiling Point=60℃
n=5, Boiling Point=82℃
n=6, Boiling Point=104℃
n=7, Boiling Point=125℃

(F1)

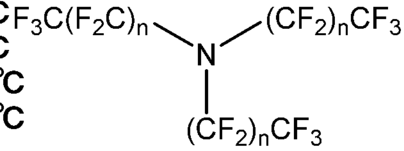

n=1 or 4
n=1, Boiling Point=135℃

(F2)

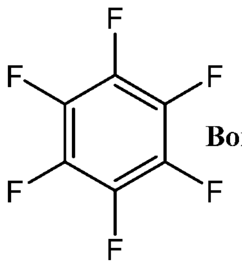

Boiling Point=81℃

(F3)

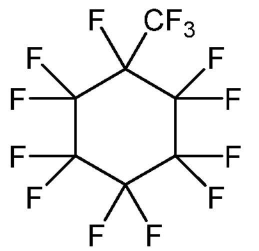

Boiling Point=76℃

(F4)

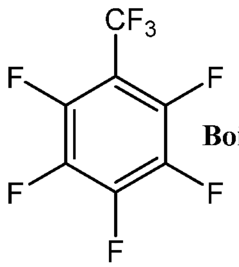

Boiling Point=104℃

(F5)

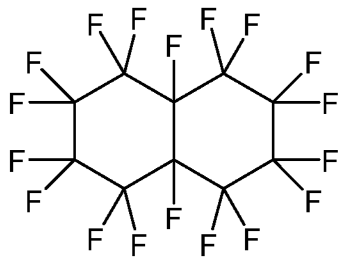

Boiling Point=142℃

(F6)

The boiling point of the organic solvent is not particularly limited. The organic solvent may be appropriately selected, for example, depending on the temperature conditions in the surface-treating. For the high reaction temperature set in the surface-treating, a high boiling point solvent may be selected as the organic solvent. Note that, for example, as will be described later, heating is not essential in the present invention, and the present invention can be implemented at ordinary temperature and normal pressure, for example. In such a case, the organic solvent need not be, for example, a high boiling point solvent, and a solvent having a not very high boiling point may be used from the viewpoint of ease of handling.

The organic phase may contain, for example, only the polymer, the halogen oxide radical, and the organic solvent, and may further contain other components. Non-limiting examples of the other components include Bronsted acid, Lewis acid, and oxygen ($O_2$). In the organic phase, the other components may be, for example, in a state of being

dissolved or undissolved in the organic solvent. In the latter case, the other components may be, for example, dispersed or precipitated in the organic solvent.

The organic phase contains the halogen oxide radical as mentioned above. The organic phase may contain the halogen oxide radical by generating the halogen oxide radical in a phase other than the organic phase and extracting the halogen oxide radical, for example. Specifically, for the reaction system being a single-phase reaction system containing only an organic phase, for example, the halogen oxide radical is generated separately in a phase other than the organic phase being the reaction system, the generated halogen oxide radical is extracted with the organic phase, and the organic phase containing the extracted halogen oxide radical as the reaction system can be used for the surface-treating. The generation of the halogen oxide radical may be performed in the aqueous phase provided separately, as will be described later, for example. On the other hand, for the liquid reaction system being a double-phase system containing the organic phase and the aqueous phase, for example, the halogen oxide radical is generated in the aqueous phase, the generated halogen oxide radical is extracted from the aqueous phase in the organic phase, and an organic phase containing the aqueous phase and the halogen oxide radical can be used for the surface-treating as the double-phase reaction system.

The polymer is placed in the organic phase. For the polymer being the molded body, the molded body is preferably fixed in the organic phase such that a portion of the molded body to be surface-treated is immersed in the organic phase and is not exposed from the organic phase, for example.

(3B-2) Aqueous Phase

The aqueous phase is, for example, an aqueous solvent. The aqueous solvent is, for example, a solvent which is separated from a solvent used in the organic phase. Examples of the aqueous solvent include water such as $H_2O$ and $D_2O$.

The aqueous phase may contain any components such as Lewis acid, Bronsted acid, and a radical generation source, for example, as will be described below. The components in the aqueous phase may be, for example, in a state in which they are dissolved or undissolved in the aqueous solvent. In the latter case, the components may be, for example, in a state in which they are dispersed or precipitated in the aqueous solvent.

(4) Surface-Treating

The surface-treating is reacting a surface of the polymer with a halogen oxide radical, as mentioned above. In the surface-treating, the reaction system may or may not be irradiated with light, for example. Hereinafter, how to irradiate the reaction system with light will be described, but the present invention is not limited thereto. As mentioned above, if the surface of the polymer can be reacted with the halogen oxide radical, the surface-treating may be performed without light irradiation. In this case, for example, in the following description, the surface-treating may be performed by omitting the light irradiation. As mentioned above, no irradiation of the polymer with light allows safety to be improved, and costs to be reduced, for example.

The reaction system contains the polymer placed therein, and the polymer may be altered. Specifically, the present invention allows the polymer to be altered easily in the presence of the halogen oxide radical. The present invention allows the degree of alteration of the polymer (e.g., the degree of alteration such as oxidation) to be easily adjusted through adjustment of the amount of the halogen oxide radical, the light irradiation time, and the like, for example. This can prevent degradation of the polymer caused by excessive oxidation, and avoid deterioration of the characteristics that the polymer originally has, for example.

For the side chain of the polymer being methyl, in the surface-treating, the methyl ($-CH_3$) may be oxidized into at least one of, for example, a hydroxymethyl ($-CH_2OH$), a formyl (-CHO), or a carboxyl (-COOH). This is assumed by the following mechanism. Specifically, the irradiation of the halogen oxide radical with light generates a radical of the halogen (e.g., a chlorine radical (Cl•)) and a molecule of the oxygen from the halogen oxide radical (e.g., a chlorine dioxide radical). Then, methyl of the polymer ($-CH_3$) is modified into a carboradical ($-CH_2$•) with a radical of the halogen (e.g., a chlorine radical (Cl•)) serving as a hydrogen-abstraction agent, and thereafter, the carboradical is modified into hydroxymethyl ($-CH_2OH$) with a molecule of the oxygen (e.g., $O_2$) serving as an oxidizing agent. Further, the hydroxymethyl ($-CH_2OH$) is further oxidized into a formyl (-CHO) or a carboxyl (-COOH). The polymer being polypropylene (PP) allows oxidation in the following formula, for example.

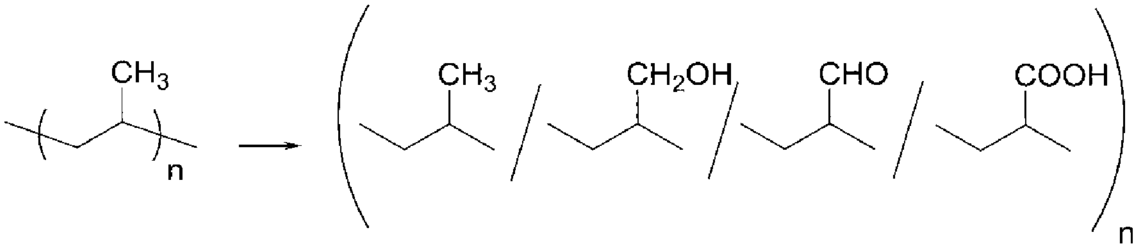

For the side chain of the polymer being an ethyl in the surface-treating, the ethyl ($-CH_2CH_3$) is oxidized into, for example, hydroxyethyl ($-CH_2CH_2OH$), an acetaldehyde group ($-CH_2CHO$), or carboxymethyl ($-CH_2COOH$).

The polymer being polyethylene (PE) allows oxidation in the following formula, for example. Specifically, for example, a main chain carbon atom to which a hydrogen atom is bonded is oxidized to hydroxymethylene (-CHOH-), carbonyl (-CO-), or the like as in the following formula. Also, for example, for the polymer being polypropylene (PP), in addition to or as substitute for the oxidation, oxidation as in the following formula may occur.

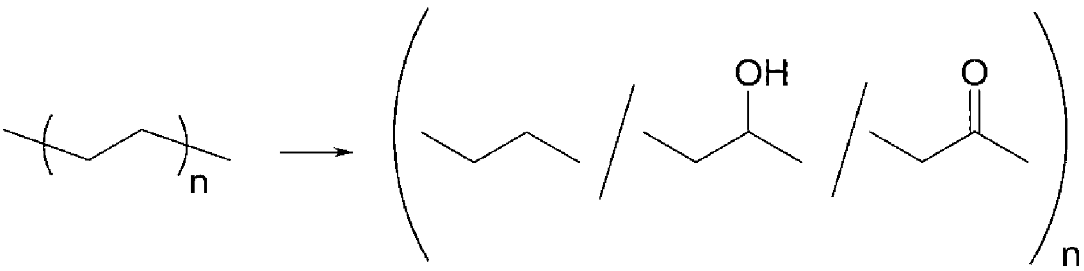

In the surface-treating, the conditions of the light irradiation are not particularly limited. As a non-limiting example, the wavelength of the irradiation light has a lower limit of 200 nm or more, and an upper limit of 800 nm or less. As a non-limiting example, the light irradiation time has a lower light irradiation of 1 second or more, and an upper limit of 1000 hours. As a non-limiting example, the reaction temperature has a lower limit of -20°C or more, an upper limit of 100°C or less or 40°C or less, and has a range from 0°C to 100°C, or from 0°C to 40°C. As a non-limiting example, the atmospheric pressure during the reaction has a lower limit of 0.1 MPa or more, and an upper limit of 100 MPa or less, 10 MPa or less, or 0.5 MPa or less, and a range from 0.1 to 100 MPa, from 0.1 to 10 MPa, or from 0.1 to 0.5 MPa. The reaction conditions during the surface-treating are, for example, a temperature from 0°C to 100°C, or from 0°C to 40°C, and a pressure from 0.1 to 0.5 MPa. As mentioned above, for example, the surface-treating can be performed without light irradiation. The present invention allows the surface-treating or all steps including the surface-treating to be performed at normal temperature (room temperature) and normal pressure (atmospheric pressure) without heating, pressurizing, and decompressing, for example. As a non-limiting example, the "room temperature" is from 5°C to 35°C. For this reason, the present invention is applicable to the polymer having a low heat resistance, for example. Further, the present invention allows the surface-treating or all steps including the surface-treating to be performed in atmosphere without substitution with inactive gas, for example.

As a non-limiting example, the light source of the light irradiation is visible light included in natural light such as sunlight. The natural light allows excitation to be performed in a simplified manner, for example. Further, as the light source, for example, as a substitute for or in addition to the natural light, light sources such as a xenon lamp, a halogen lamp, a fluorescent lamp, a mercury lamp, and an LED lamp can be used. In the light irradiation, for example, a filter for cutting wavelengths other than the necessary wavelengths can further be used as appropriate.

For the polymer being the molded body in the present invention, for example, any limited region of the molded body can be irradiated with light to subject only the region to alteration treatment. How to control such a selective light irradiation is not particularly limited, and for example, any limited region may the only one be irradiated with light, or a region not to be irradiated with light is masked, and then the entire molded body may be irradiated with light.

For the reaction system being the liquid reaction system, for example, at least the organic phase may be irradiated with light in the surface-treating. For the reaction system being a single-phase reaction system of only the organic phase, for example, the surface-treating may be performed by irradiating the single-phase reaction system with light. For the reaction system being a double-phase reaction system of the organic phase and the aqueous phase, for example, the organic phase may only be irradiated with light, or the double-phase reaction system may only be irradiated with light. For the reaction system being the liquid reaction system, for example, the liquid reaction system may be irradiated with light with contacting with air. For the reaction system being the double-phase reaction system, the double-phase reaction system may be irradiated with light with oxygen dissolved in the aqueous phase.

The surface-treating of the present invention can alter the polymer by generating a radical of the halogen (e.g., a chlorine atom radical Cl•) and an oxygen molecule $O_2$ through, for example, mere light irradiation in the presence of the halogen oxide radical to bring the polymer to react (e.g., oxidize). Then, for example, the present invention can change and alter the polymer efficiently in a simplified manner even under extremely mild conditions such as normal temperature and normal pressure.

The present invention allows the metal plating polymer altered or the adhesion laminate producing polymer of the polymer and the adherend to be obtained, without a toxic heavy metal catalyst, for example. Therefore, as mentioned above, for example, the polymer may be altered efficiently with the low load on the environment in addition to the reaction being performed under the very mild conditions.

As an oxidation of the polymer, addition of a compound such as maleic acid or acrylic acid to a polymer such as PE or PP using peroxide has been known. However, since these compounds are accompanied by a crosslinking reaction, a decomposition reaction, or the like of PE and PP, it is difficult to improve the content of the site to be oxidized in the polymer. On the other hand, the present invention can improve the content of the site to be oxidized in the polymer, relative to that in the past.

(5) Generating Halogen Oxide Radical

The present invention may further include generating a halogen oxide radical, for example. The generating a halogen oxide radical may be performed prior to or in parallel with the surface-treating, for example. How to generate the halogen oxide radical is not particularly limited.

In the generating a halogen oxide radical, for example, the halogen oxide radical may be generated in a radical generation reaction system. The reaction system in the surface-treating may be, for example, either the gas reaction system (gas phase) or the liquid reaction system (liquid phase). The radical generation reaction system after the generation of the halogen oxide radical may be used as it is as the liquid reaction system in the surface-treating, for example.

For the reaction system in the surface-treating being the gas reaction system, for example, the radical generation reaction system may be prepared separately from the reaction system in the surface-treating. The radical generation reaction system may be, for example, an aqueous phase containing a source of the halogen oxide radical. The aqueous phase includes, for example, a source of the halogen oxide radical, and in the generating the halogen oxide radical, the halogen oxide radical is generated from the source. The aqueous phase is, for example, a phase of an aqueous solvent, and the aqueous solvent is the same as mentioned above. For the halogen oxide radical generated in the aqueous phase having hydrophobicity, for example, the halogen oxide radical may be transferred into the organic phase using a double-phase reaction system containing the organic phase and the aqueous phase. As mentioned above, in the surface-treating performed in the gas reaction system, the halogen oxide radical generation reaction system may be for example, either only an aqueous phase or a double-phase reaction system of an aqueous phase and an organic phase. For the halogen oxide radical being hydrophobic, for example, the radical generated in the aqueous phase can be transferred directly into the gas phase. Thus, the radical generation reaction system may be only the aqueous phase.

For the reaction system in the surface-treating being the liquid reaction system which contains an aqueous phase, for example, the aqueous phase may be the radical generation reaction system. For the reaction system in the surface-treating being the gas reaction system, the aqueous phase may be, for example, the same as the radical generation reaction system. For the halogen oxide radical generated in the aqueous phase having hydrophobicity, for example, the halogen oxide radical may be transferred into the organic phase using a double-phase reaction system containing the organic phase and the aqueous phase.

The source of the halogen oxide radical (radical generation source) is not particularly limited, and may be selected, as appropriate, according to the kind of the halogen oxide radical, for example. One kind or a plurality of kinds of the source of the halogen oxide radical may be used in combination, for example.

The source of the halogen oxide radical is, for example, a compound containing oxygen and halogen, and can be halous acid ($HXO_2$) or a salt thereof as a specific example. Non-limiting examples of the salt of the halous acid include a metal salt, and examples of the metal salt include alkaline metal salts, alkaline earth metal salts, and rare earth salts. The source of the halogen oxide radical may be, for example, a compound containing oxygen, halogen, and a Group 1 element (e.g., at least one selected from the group consisting of H, Li, Na, K, Rb, and Cs), and can be for example, the halous acid or an alkaline metal salt thereof. For the halogen oxide radical being the chlorine dioxide radical, non-limiting examples of the source thereof include chlorous acid ($HClO_2$) and salts thereof, and specific examples thereof include sodium chlorite ($NaClO_2$), lithium chlorite ($LiClO_2$), potassium chlorite ($KClO_2$), magnesium chlorite ($Mg(ClO_2)_2$), and calcium chlorite ($Ca(ClO_2)_2$). Among them, from the viewpoint of cost, ease of handling, and the like, sodium chlorite ($NaClO_2$) is preferred. For example, a similar way can be employed for sources of other halogen oxide radicals. Examples of the other sources include bromite such as sodium bromite and iodite such as sodium iodite.

The concentration of the source in the aqueous phase is not particularly limited. For the source being the compound, the concentration has, for example, a lower limit of 0.0001 mol/L or more, and an upper limit of 1 mol/L or

less when converted in to the concentration of the halogen oxide ion, and has a lower limit of 1/100000 times or more, and an upper limit of 1000 times or less of the number of moles of the raw material when converted into the number of moles of the halogen oxide ion. For the source being the halous acid or a salt thereof (e.g., chlorous acid or a salt thereof), the concentration has, for example, a lower limit of 0.0001 mol/L or more, and an upper limit of 1 mol/L or less when converted into the concentration of the halous acid ion (e.g., chlorite ion ($ClO_2^-$)). The concentration of the source has, for example, a lower limit of 1/100000 times or more, and an upper limit of 1000 times or less of the number of moles of the raw material when converted into the number of moles of the halous acid ion (e.g., a chlorite ion ($ClO_2^-$)). For other sources, for example, the same concentrations may be used.

The aqueous phase may further contain, for example, at least one of Lewis acid or Bronsted acid, which may act on the halogen oxide ion to generate the halogen oxide radical. At least one of the Lewis acid or Bransted acid is, for example, at least one of Lewis acid or Bronsted acid containing the Group 1 element. The halogen oxide ion is, for example, a chlorite ion ($ClO_2^-$). The aqueous phase contains, for example, either one of or both of the Lewis acid or Bronsted acid, or one substance serving as both of the Lewis acid and Bronsted acid. Only one kind each of the Lewis acid and Bronsted acid may be used, or a plurality of kinds of the Lewis acid and Bronsted acid may be used in combination. In the present invention, the "Lewis acid" refers to a substance serving as Lewis acid for the source of the halogen oxide radical, for example.

The concentration of at least one of the Lewis acid or Bronsted acid in the aqueous phase is not particularly limited and can be set, as appropriate, according to the kind of the polymer to be altered, for example. The concentration has, for example, a lower limit of 0.0001 mol/L or more, and an upper limit of 1 mol/L or less.

Non-limiting examples of the Bronsted acid include inorganic acids and organic acids, and specific examples thereof include trifluoromethanesulfonic acid, trifluoroacetic acid, acetic acid, hydrofluoric acid, hydrogen chloride, hydrobromic acid, hydroiodic acid, sulfuric acid, sulfurous acid, nitric acid, nitrous acid, phosphoric acid, and phosphorous acid. The Bronsted acid has an acid dissociation constant pKa of, for example, 10 or less. As a non-limiting example, the pKa has a lower limit of, for example, -10 or more.

It is preferred that the aqueous phase contains, for example, the halogen oxide ion and the Bronsted acid, and is, for example, an aqueous phase obtained by dissolving the compound and the Bronsted acid (e.g., hydrochloric acid) in an aqueous solvent. As a specific example, for the halogen oxide radical being a chlorine dioxide radical, it is preferred that the aqueous phase contains, for example, chlorite ion ($ClO_2^-$) and Bronsted acid, and is, for example, an aqueous phase obtained by dissolving the sodium chlorite ($NaClO_2$) and the Bronsted acid (e.g., hydrochloric acid) in an aqueous solvent.

In the aqueous phase, the Lewis acid, the Bronsted acid, the radical generation source, and the like may be, for example, in a state in which they are dissolved or undissolved in the aqueous solvent. In the latter case, these may be dispersed or precipitated in an aqueous solvent, for example.

As a non-limiting example, the generating a halogen oxide radical may be performed by bringing the source of the halogen oxide radical to be contained in the aqueous solvent to naturally generate the halogen oxide radical (e.g., a chlorine dioxide radical) from the halogen oxide ion (e.g., a chlorite ion). For example, it is preferred that in the aqueous phase, the source is dissolved in the aqueous solvent, and the aqueous phase is left to stand. In the generating a halogen oxide radical, the coexisting of at least one of the Lewis acid or the Bronsted acid in the aqueous phase allows the generation of the halogen oxide radical to be further promoted, for example. In the generating a halogen oxide radical, for example, the irradiation of the aqueous phase with light also allows the generation of the halogen oxide radical, but mere standing still of the aqueous phase also allows the generation of the halogen oxide radical.

The mechanism of generating the halogen oxide radical from the halogen oxide ion in the aqueous phase is presumed to be the same as in FIG. 1 (a liquid phase reaction system, a double-phase system of an organic phase and an aqueous phase), which will be described later. It is to be noted, however, that this description is merely an illustrative example, and by no means limits the present invention.

For the reaction system being the liquid reaction system, and a double-phase reaction system of the organic phase and the aqueous phase, as mentioned above, the liquid reaction system after generation of the halogen oxide radical may be applied as it is to the surface-treating. Since the halogen oxide radical generated from the source in the aqueous phase in the reaction system is hardly dissolved in water, the halogen oxide radical is dissolved in the organic phase in the reaction system. For example, the liquid reaction system containing the halogen oxide radical generated may be irradiated with light to perform the surface-treating of altering the polymer. In this case, for example, the generating a halogen oxide radical and the surface-treating can be performed continuously by irradiating only the liquid reaction system with light. In the present invention, the generating a halogen oxide radical and the surface-treating in the double-phase reaction system achieves higher reaction efficiency, for example.

On the other hand, for the reaction system in the surface-treating being the liquid reaction system, and a single-phase reaction system only containing the organic phase, for example, the halogen oxide radical is generated in the aqueous phase in the manner described above, the generated halogen oxide radical is dissolved (extracted) in the organic phase, the aqueous phase is then removed, and the organic phase containing the halogen oxide radical may

be applied, as the single-phase reaction system, to the surface-treating.

FIG. 1 schematically illustrates an example of the generating a halogen oxide radical and the surface-treating in the double-phase reaction system. FIG. 1 shows a specific example of the chlorine dioxide radical being the halogen oxide radical and the molded body being the polymer, but the present invention is not limited by the example. As shown in FIG. 1, in the reaction system, two layers of an aqueous layer (the aqueous phase) and an organic layer (the organic phase) are separated in a reaction container, and are in contact with each other only at interfaces. An upper layer is the aqueous layer (the aqueous phase) 2, and a lower layer is the organic layer (the organic phase) 1. FIG. 1 is a cross-sectional view, but hatching of the aqueous layer 2 and the organic layer 1 is omitted for the sake of clarity. As shown in FIG. 1, chlorite ions ($ClO_2^-$) in the aqueous layer (aqueous phase) 2 react with acid to generate chlorine dioxide radicals ($ClO_2$•). Since the chlorine dioxide radicals ($ClO_2$•) are hardly dissolved in water, they are dissolved in the organic layer 1. Then, the organic layer 1 containing the chlorine dioxide radicals ($ClO_2$•) is irradiated with light, thereby decomposing the chlorine dioxide radicals ($ClO_2$•) in the organic layer 1 and generating chlorine radicals (Cl•) and an oxygen molecule ($O_2$). Thus, a molded body of the polymer in the organic layer (organic phase) 1 is oxidized, and the surface is altered. It is to be noted, however, that FIG. 1 shows merely an illustrative example and by no means limits the present invention.

In FIG. 1, the aqueous layer 2 is the upper layer and the organic layer 1 is the lower layer, but for example, when the organic layer 1 has a lower density (specific gravity), the organic layer 1 is the upper layer. For the polymer being the molded body, for example, it may be immobilized in the reaction container such that the molded body of the polymer is placed in the organic layer of the upper layer. In this case, a fixing portion for fixing the molded body of the polymer may be provided, for example, inside or outside the reaction container. In the latter case, for example, the molded body of the polymer may be suspended from the outside and may then be immersed in the organic layer.

Although FIG. 1 shows the double-phase reaction system, the surface-treating may also be performed in a single-phase reaction system containing only an organic phase in the production method according to the present invention. In this case, for example, an aqueous phase containing a source of the halogen oxide radical is prepared separately to generate the halogen oxide radical in the aqueous phase, the organic phase is then mixed with the aqueous phase to dissolve (extract), in the organic phase, and the halogen oxide radical generated in the aqueous phase. Then, the aqueous phase and the organic phase are separated from each other, the organic phase is recovered, and the polymer is placed therein. Using this as a single-phase reaction system, the surface-treating is independently performed by light irradiation in the presence of the halogen oxide radical. For the reaction system in the surface-treating being the gas reaction system, as mentioned above, the surface-treating may be performed in the gas reaction system after generation of the halogen oxide radical in the aqueous phase.

(6) Introducing Functional Group

The treated polymer production method according to the present invention may further include, for example, introducing a functional group into a changed site of the polymer. Examples of the changed site (altered site) in the polymer include a site into which an element such as mentioned above has been introduced, and specific examples thereof include an oxidized site.

The treated polymer production method according to the present invention can alter the polymer by the surface-treating, and can further change physical properties of the polymer by introducing a functional group, as mentioned above.

The treated polymer production method according to the present invention can impart various functions to the polymer by further introducing a functional group, for example.

The treated polymer production method according to the present invention can change physical properties of the polymer by introducing the functional group, for example. Introducing a functional group includes, for example, applying an agent to the polymer. The changing of physical properties of the polymer in this manner, for example allows expansion of the applications of the polymer to a delivery material, a sustained release material, culture component of cells such as iPS cells, and the like, for example.

(7) Plating Metal

In the metal-plated polymer production method and the metal-plated polymer according to the present invention, non-limiting examples of the metal include Group 4 elements (e.g., titanium, zirconium, hafnium), Group 5 elements (e.g., vanadium, niobium, tantalum), Group 6 elements (e.g., chromium, molybdenum, tungsten), Group 7 elements (e.g., manganese, technetium, rhenium), Group 8 elements (e.g., iron, ruthenium, osmium), Group 9 elements (e.g., cobalt, rhodium, iridium), Group 10 elements (e.g., nickel, palladium, platinum), Group 11 elements (e.g., copper, silver, gold), Group 12 elements (e.g., zinc, cadmium, mercury), Group 13 elements (e.g., aluminium, gallium, indium, thallium), Group 14 elements (e.g., germanium, tin, lead), and Group 15 elements (e.g., arsenic, antimony, bismuth). One kind of the metal may be used, or an alloy of a plurality of kinds of the metal may be used. Non-limiting examples of the alloy

include solder.

In the present invention, for example, the alteration of the polymer by the surface-treating allows the polymer to be easily plated with the metal, which is a different material. More specifically, for example, the hydrophilization of the surface of the polymer by the surface-treating exhibits, for example, an effect of easily supporting the plating catalyst on the surface of the polymer, thereby plating easily. Further, for example, the hydrophilization of the surface of the polymer by the surface-treating allows the plating metal itself to be easily supported on the surface of the polymer, thereby hardly peeling a metal coating after the plating.

The combination of the polymer to be surface-treated and the metal is not particularly limited. The following Tables 1 and 2 show examples of the combination of the polymer to be surface-treated and the metal. In Table 1 below, each of the listed polymers to be surface-treated can be combined with each of the metals described in the right column. Similarly, in Table 2 below, each of the listed polymers to be surface-treated can be combined with each of the metals described in the right column. The present invention is not limited to these combinations.

Table 1

| Combination | |
|---|---|
| Polymer to be surface-treated | Metal |
| ABS Resin | |
| Polyolefin | Various Metals Nickel Copper Chromium |
| Polyethylene | |
| Polypropylene | |
| Polycarbonate | |
| Polyester | |
| Polylactic Acid | |
| Polyimide | |
| Polyamide | |

Table 2

| Combination | |
|---|---|
| Polymer to be surface-treated | Metal |
| ABS Resin | |
| Polyolefin | Various Metals Gold Silver Platinum |
| Polyethylene | |
| Polypropylene | |
| Polycarbonate | |
| Polyester | |
| Polylactic Acid | |

(8) Plating

In the metal-plated polymer production method according to the present invention, the plating is plating the surface of the polymer with the metal after the surface-treating.

Non-limiting examples of the plating include commonly used plating of the polymer and plating similar thereto. In the present invention, non-limiting specific examples of the plating include electroless plating, gas phase plating, electroplating, and melting plating. For example, the surface of the polymer after the surface-treating may be plated with a metal by electroless plating or gas phase plating, and the surface of the metal may then be further plated with a metal by electroplating or melting plating. Non-limiting examples of the specific plating of electroless plating, gas phase plating, electroplating, and melting plating include commonly used plating and the plating similar thereto.

As a non-limiting example, the plating can be performed as follows, for example, for the electroless plating. An example of the metal-plated polymer production method according to the present invention including the surface-treating and the plating will be described below. First, a polymer is provided. Next, a surface to be plated with a metal in the polymer (metal-plating surface) is surface-treated (surface-altered) by the surface-treating. Note that, although the metal-plating surface may be irradiated with light, the present invention is not limited to the light irradiation as mentioned above as long as the surface of the polymer can react with the halogen oxide radical. Further, after the surface-treating, introducing the functional group may be performed as required. Thus, an altered surface of the polymer (altered surface) is formed. The altered surface may be hydrophilized by, for example, oxidizing the surface of the polymer, or oxidizing the surface of the polymer and introducing a functional group.

Next, the plating is performed. That is, first, a catalyst is supported on the altered surface. Specifically, for example, first, the altered surface is brought into contact with a liquid containing a catalyst. More specifically, for example, the altered surface may be immersed in the liquid. The liquid may be, for example, an aqueous solution of the catalyst. The catalyst is not particularly limited and may be the same as a catalyst for the commonly used electroless plating, and examples thereof include a palladium catalyst and a silver catalyst. Examples of the palladium catalyst include palladium chloride (PdCh), palladium sulfate ($PdSO_4$), and palladium nitrate ($Pd(NCO_3)_2$). One kind of the catalyst may be used, or a plurality of kinds of the catalyst may be used in combination. Further, the catalyst may or may not contain, for example, a cocatalyst. Non-limiting examples of the cocatalys include a tin catalyst. The tin catalyst can be, for example, stannous chloride (SnCh). Non-limiting examples of the concentration of the catalyst in the liquid include the concentration in commonly used electroless plating and the concentration similar thereto. As a non-limiting example, the time for bringing the altered surface into contact with the liquid is 0.01 minutes or more, 0.1 minutes or more, 0.5 minutes or more, 1 minute or more, or 10 minutes or more, and is 60 minutes or less, 45 minutes or less, 30 minutes or less, 20 minutes or less, or 15 minutes or less. In addition, at this time, the liquid may be heated, or may be at room temperature without heating, for example. More specifically, non-limiting examples of the temperature of the liquid include 0°C or more, 5°C or more, 10°C or more, or 20°C or more, and 100°C or less, 80°C or less, 60°C or less, or 40°C or less. Thereafter, the altered surface is washed with, for example, water to remove excessive catalyst and the like. Thus, only a necessary amount of the catalyst remains supported on the altered surface. Note that, for example, contact and washing with the liquid containing the catalyst may be repeatedly performed a plurality of times. Alternatively, for example, contact and washing with each of a plurality of kinds of liquid containing the catalyst may be performed. Further, the altered surface on which the catalyst has been supported is plated with metal. Specifically, for example, first, the altered surface on which the catalyst has been supported is brought into contact with a liquid containing ions of the metal. Specifically, for example, the altered surface may be immersed in the liquid. The liquid may be, for example, an aqueous solution of the salt of the metal. Non-limiting examples of the salt of the metal include the salt commonly used in electroless plating and the salt similar thereto. Non-limiting examples of the concentration of the liquid include the concentration commonly used in electroless plating and the salt similar thereto. As a non-limiting example, the time for bringing the altered surface on which the catalyst has been supported into contact with the liquid containing ions of the metal is 0.01 minutes or more, 0.1 minutes or more, 0.5 minutes or more, or 1 minutes or more, and 10 minutes or less, 1500 minutes or less, 100 minutes or less, 50 minutes or less, 20 minutes or less, or 10 minutes or less. In addition, at this time, non-limiting examples of the temperature of the liquid containing ions of the metal include 0°C or more, 10°C or more, 20°C or more, or 30°C or more, and 100°C or less, 90°C or less, 80°C or less, or 70°C or less. Thus, the metal can be deposited on the altered surface on which the catalyst has been supported, thereby plating the altered surface.

An example of the commonly used electroless plating for the polymers will be shown below. First, a polymer is provided. Next, the polymer is immersed in an etchant (e.g., an aqueous solution of a heavy metal oxidizing agent such as chromic acid). Thus, at least one surface of the polymer is roughened, thereby forming a roughened surface. Further, the roughened surface is washed and dried to form a metal-plating surface. Then, the catalyst is supported on the metal-plating surface. Further, the metal-plating surface on which the catalyst has been supported is plated with the metal.

The metal-plated polymer production method according to the present invention can be performed without a heavy metal oxidizing agent, for example, as mentioned above. This can solve problems such as toxicity of the heavy metal catalyst, treatment cost of the heavy metal oxidizing agent, and load on the environment, for example, as mentioned above. Further, this can shorten the process and improve the production efficiency, for example, as compared with the commonly used electroless plating. In addition, the metal-plated polymer production method according to the present invention can be easily performed, is applicable to a wide range of polymers, and is, for example, applicable also to biomass plastics such as polylactic acid (PLA). Note that the above description is illustrative and does not limit the present invention.

The metal-plated polymer production method according to the present invention can, for example, pattern the surface of the polymer to plate part of the surface with a metal. Specifically, for example, the polymer is subjected to patterning and the surface-treating. Thus, a part of the metal-plating surface is altered by the surface-treating to form the altered surface. As a non-limiting example, how to perform patterning may be coating a surface other than the altered

surface in the polymer with any substance (mask). Non-limiting examples of the material of the mask include glass, metal, paper, and clay. The reaction by light irradiation may be performed by irradiating a part other than the mask with light, for example. Further, the altered surface is plated with the metal in the plating, thereby producing a metal-plated polymer, a part of which has been plated. Such a method can impart electroconductivity to only a necessary part of the surface of the polymer, for example, and is thus suitable for an electronic device and the like. Note that the mask may be peeled from the polymer after the surface-treating or the plating.

The metal-plated polymer production method according to the present invention is applicable to a polymer of any shape as mentioned above. For this reason, it is also possible to plate a polymer of a complicated shape with a metal, for example. The metal-plated polymer production method according to the present invention can plate, for example, the polymer of a complicated shape which is difficult to be plated by a commonly used method, and can plate, for example, an inner surface of a tube. As described above, it is possible to plate the surface of the polymer of a complicated shape, and thus can produce a product with high designability. For example, it is also possible to impart a function such as electroconductivity to the surface of the polymer.

(9) Adherend

In the present invention, non-limiting examples of the adherend to the polymer after surface treatment include metal, ceramic, another polymer, glass, cloth, and paper as mentioned above. Non-limiting examples of the metal include aluminum, nickel, iron, gold, silver, copper, and alloys such as duralumin, high tensile steel, and stainless steel. Non-limiting examples of the ceramic include zirconia, aluminum oxide, ferrite, barium titanate, boron nitride, silicon carbide, silicon nitride, and steatite. Non-limiting examples of the another polymer may include those shown as examples of the polymer, which will be described later. The polymer and the another polymer which is the adherend may be polymers of the same kind or polymers of different kinds.

In the present invention, the polymer is altered by the surface-treating. For example, this allows the adherend which is a different material (e.g., a polymer, metal, or ceramic of different kind) to be easily adhered to the polymer. More specifically, for example, the metal has a free electron and is hydrophilic. Thus, the hydrophilization of the surface of the polymer by the surface-treating allows the metal to be easily adhered thereto. For example, there is a possibility that the oxygen functional group introduced into the surface of the polymer by the surface-treating forms a coordinate bond with the metal, thereby allowing the polymer and the metal to easily adhere to each other. It is to be noted, however, that these descriptions are merely illustrative examples and by no means limit the present invention.

There is no particular limitation on the shape, size, and the like of the adherend. Examples of the shape include a sheet, a film, a plate, a tube, a pipe, a bar, a bead, a block, and a particle, a lysate, a sol, a gel, a woven fabric, a nonwoven fabric and a yarn. As a non-limiting example, the size of the adherend may be arbitrarily selected.

The adherend is not limited to, for example, a solid, and may be a flowable adherend. The flowable adherend may be, for example, a liquid or a solid. The flowable adherend refers to one solidified by drying or curing after applying, for example. Examples of the flowable adherend include a paint, an adhesive, an acrylic resin, a polyurethane, silicone, an epoxy resin, a phenol resin, an urea resin, a melamine resin, a lysate, a sol, and a gel. For example, the flowable adherend may be applied to the surface of the polymer after the surface-treating to adhere (the adhering) to the surface of the polymer. The flowable adherend may be, for example, dried if necessary after the applying. In general, a paint applied to the surface of the polymer may be easily peeled off. This is particularly problematic for the polymer being polypropylene (PP). However, the surface-treating of the present invention allows the affinity between the flowable adherend (e.g., a paint) and the surface of the polymer to be enhanced, thereby avoiding peeling off of the adherend.

The combination of the polymer to be surface-treated and the adherend is not particularly limited. Examples of the adherend include metals and polymers. Examples of the combination of the polymer to be surface-treated and the adherend are shown in Table 3 below. In Table 3 below, each of the listed polymers to be surface-treated can be combined with each of the metals and polymers described in the right column. The present invention is not limited to these combinations.

Table 3

| Combination | | |
|---|---|---|
| Polymer to be surface-treated | Adherend | |
| | Metal | Polymer |
| Polyolefin | | Polyolefin<br>Polypropylene<br>Polyethylene |
| Polypropylene | | |
| Polyethylene | | |

(continued)

| Combination | | |
|---|---|---|
| Polymer to be surface-treated | Adherend | |
| | Metal | Polymer |
| Polyurethane | Various Metals | Polyurethane |
| Polycarbonate | Aluminum | Polycarbonate |
| Polyester | Stainless Steel | Polyester |
| Polylactic Acid | High Tensile Steel | Polylactic Acid |
| Fiber Reinforced Plastic (FRP) | Magnesium | FRP |
| Carbon Fiber Reinforced Plastic (CFRP) | Titanium | CFRP |
| Polyimide | | Polyimide |
| Polyamide | | Polyamide |
| Polyether Ether Ketone (PEEK) | | PEEK |
| Polyhydroxy Alkanoic Acid | | Polyhydroxy Alkanoic Acid |

(10) Adhering

In the adhesion laminate production method according to the present invention, the adhering is adhering the adherend to the surface of the polymer after the surface-treating. Non-limiting examples of the adhering include commonly used adhering of the polymer and the adherend and adhering similar thereto.

The adhering may include, for example, bringing the polymer and the adherend into direct contact with each other and then pressing them without a primer (undercoat layer), an adhesive, or any other agent. As a non-limiting example, the pressure during the pressing has a lower limit of 0.1 MPa or more, 0.5 MPa or more, 1 MPa or more, 5 MPa or more, or 10 MPa or more, and an upper limit of 100 MPa or less, 50 MPa or less, 40 MPa or less, 30 MPa or less, or 25 MPa or less. As a non-limiting example, the time for applying the pressure has a lower limit of 0.01 minutes or more, 0.1 minutes or more, 3 minutes or more, 5 minutes or more, or 10 minutes or more, and an upper limit of 60 minutes or less, 45 minutes or less, 30 minutes or less, or 20 minutes or less. As a non-limiting example, how to perform pressing may be pressing with a roller, or pressing with hands. One or both of the polymer and the adherend may be heated (heat-pressed) prior to the pressing or in parallel with the pressing, or the polymer and the adherend may be merely pressed without heating. As a non-limiting example, the heating temperature has a lower limit of 0°C or more, 10°C or more, 20°C or more, 45°C or more, or 60°C or more, and an upper limit of 200°C or less, 150°C or less, 120°C or less, 100°C or less, or 90°C or less. For the polymer having a high glass-transition temperature, heating at an appropriate temperature allows the polymer to be easily adhered to the adherend, for example. For the polymer being polylactic acid (PLA), the heating temperature has a lower limit of 30°C or more, 40°C or more, 50°C or more, 55°C or more, or 60°C or more, and an upper limit of 120°C or less, 100°C or less, 90°C or less, or 80°C or less, for example. For the polymer being polypropylene (PP), the heating temperature has, for example, a lower limit of 0°C or more, 5°C or more, 10°C or more, or 15°C or more, or 20°C or more, and an upper limit of 100°C or less, 90°C or less, 80°C or less, 60°C or less, or 40°C or less.

For an adhesion laminate of the polymer and the adhesion laminate obtained in the manner described above, the peel strength between the polymer and the adherend is not particularly limited, for example. The peel strength has a lower limit of, for example, 0.001 $N/mm^2$ or more, 0.01 $N/mm^2$ or more, 0.1 $N/mm^2$ or more, 1 $N/mm^2$ or more, 5 $N/mm^2$ or more, or 10 $N/mm^2$ or more, and an upper limit of, for example, 1000 $N/mm^2$ or less, 500 $N/mm^2$ or less, 100 $N/mm^2$ or less, 50 $N/mm^2$ or less, or 20 $N/mm^2$ or less.

In the adhesion laminate of the polymer and the adherend according to the present invention, for example, the adherend may be in direct contact with the surface of the polymer. The "direct contact" of the adherend to the surface of the polymer means that the adherend is in direct contact with the surface of the polymer without other layers such as an adhesive or a pressure-sensitive adhesive interposed therebetween.

A commonly used way to adhere the polymer and the adherend is, for example, as follows. First, a polymer is provided. Next, a part to be adhered to the adherend in the surface of the polymer is washed and dried, and a primer (undercoat layer) is applied to the part, which is again dried. Further, an adhesive is applied on the primer, and the adhered is bonded and then dried, and the polymer and the adherend are bonded. In this manner, an adhesion laminate

of the polymer and the adherend is produced.

In contrast, the adhesion laminate production method according to the present invention is, for example, as follows. First, a polymer is provided, and a part to be adhered to the adherend in the surface of the polymer is altered by the surface-treating. Next, the altered surface obtained by the surface treatment of the polymer is brought into contact with an adherend, and is pressed as mentioned above, to adhere the polymer and the adherend (adhering). In this manner, an adhesion laminate of the polymer and the adherend is produced.

In the present invention, as mentioned above, the polymer can be altered by the surface-treating. Thus, for example, merely by pressing without using a primer, an adhesive, and the like, a polymer can be adhered to an adherend which cannot typically be adhered without these agents. This can shorten the adhering between the polymer and the adherend, and improve the production efficiency, for example. More specifically, for example, since the primer, adhesive, and the like are unnecessary, applying and drying these agents are unnecessary. Further, for example, since the primer, adhesive, and the like are unnecessary, a solvent is unnecessary, and effects such as the ease of a waste fluid treatment, improvement of recyclability, and a reduction in environmental burden can be obtained. The adhesion laminate production method according to the present invention is not limited thereto, and for example, a primer, an adhesive, and the like may be used as in the commonly used adhering way. In this case, non-limiting examples of the primer and the adhesive include, as mentioned above, those commonly used in adhering or those similar thereto. The adhesion laminate production method according to the present invention alters the polymer by the surface-treating. This allows the affinity with a primer, an adhesive, and the like to be improved, and adhesion to be further facilitated, for example.

As mentioned above, for the flowable adherend, for example, the adherend may be applied to adhere to the polymer, for example. As a non-limiting example, how to apply the flowable adherend may be a commonly used way of applying the flowable adherend (e.g., a paint).

(11) Polymer for Producing Metal-Plated Polymer or Adhesion Laminate of Polymer and Adherend

The polymer according to the present invention is a polymer for producing a metal-plated polymer or an adhesion laminate of the polymer and an adherend, as mentioned above. The polymer according to the present invention has an amount of change X in contact angle with water represented by X = Ao - A of more than 0°, as mentioned above. As mentioned above, Ao is a contact angle of a non-oxidized surface of the polymer with water, and A is a contact angle of the oxidized surface of the polymer with water. The amount of change X in contact angle with water is, for example, 1° or more, 2° or more, 5° or more, 10° or more, 20° or more, or 30° or more, has an upper limit of 0° or less, and is, as a non-limiting example, 60° or less. As a non-limiting example, how to measure the contact angle with water and a measuring instrument therefor are as described in the Examples, which will be described later.

As a non-limiting example of a method for producing the polymer according to the present invention, a polymer to be treated in the surface-treating can be produced by altering through the surface-treating. The polymer to be treated is, for example, as mentioned above.

The polymer according to the present invention may be, for example, polypropylene having a ratio C = O/C-H of more than 0, the ratio C = O/C-H being a ratio of an area of a peak derived from C = O stretching at 1700 to 1800 $cm^{-1}$ to an area of a peak derived from C-H stretching at 2800 to 3000 $cm^{-1}$ in an infrared absorption spectrum of the oxidized surface. C = O/C-H is, for example, 0.0001 or more, 0.001 or more, 0.02 or more, or 0.03 or more, and is, for example, 1.0 or less, 0.4 or less, 0.3 or less, or 0.2 or less. As a non-limiting example, how to measure an infrared absorption spectrum (also referred to as an infrared spectrum, an IR spectrum, or merely IR) and a measurement instrument are described in the Examples, which will be described later.

The polymer according to the present invention contains, for example, but is not limited to, oxygen ($\alpha$) and halogen ($\beta$). For example, the polymer according to the present invention may not contain the halogen ($\beta$).

Typically, as how to alter a polymer such as polyethylene and polypropylene, it has been known to introduce maleic anhydride using a radical reaction, for example. However, in such a typical way, for example, a crosslinking reaction and a decomposition reaction in the polymer may occur in parallel under commercially suitable conditions, and an introduction rate of maleic anhydride into the polymer is only about several percentages by weight in many cases. The introduction rate of a functional group into the polymer according to the present invention is preferably equal to or higher than that of such an example.

The polymer according to the present invention contains the oxygen ($\alpha$) and the halogen ($\beta$) as, for example, functional groups. Examples of the functional group containing oxygen ($\alpha$) include hydroxyl, carbonyl, and an amide group. Examples of the functional group containing halogen ($\beta$) include a chlorine group, a bromine group, an iodine group, an alkyl chloride group, an alkyl bromide group, and an alkyl iodide group.

For the polymer according to the present invention, the polymer containing oxygen ($\alpha$) and halogen ($\beta$) (also referred to as a polymer skeleton) contains, for example, carbon and hydrogen and has a carbon-hydrogen bond. As the polymer, for example, those described for the surface-treating may be used, and as mentioned above, examples thereof include polyolefin, polyester, and polycarbonate. Examples of the polyolefin include polyethylene and polypropylene. Examples of the polyester include polylactic acid.

The solid polymer according to the present invention may be, for example, an unmolded body or molded body, and may be used in combination with other polymers. As a form of the polymer according to the present invention, those described for the surface-treating may be used, for example.

The polymer according to the present invention may be produced by the surface-treating or a method including the surface-treating and still other steps (e.g., introduction of a functional group), for example, as mentioned above.

(12) Application of Metal-plated Polymer

The application of the metal-plated polymer according to the present invention is not particularly limited, and may be used in any application. The metal-plated polymer according to the present invention is applicable in various fields such as, for example, transportation materials (automobiles, aircraft), electronic devices, building materials, medical devices, and large structures. Specifically, in recent years, from the viewpoint of weight reduction of transportation materials, multi-materialization, and the like, demands for metal-plating of polymers have been increasing in interior, exterior, and the like in the fields of automobiles, aircraft, and the like. According to the present invention, for example, even a resin material (polymer) which is hydrophobic and poor in adhesiveness can be plated with a metal, and it is possible to meet the demands.

In the present invention, for example, polymers used in various fields are altered to have desired properties. Thus, the metal-plated polymer according to the present invention is applicable to the various fields. As a specific example, the metal-plated polymer according to the present invention is applicable to a field of organic electroluminescence (EL). In this case, for example, the polymer can be altered to have insulation properties and electroconductivity, and the degree of the electroconductivity can be weakened, and examples of the polymer include a phenolic resin, an epoxy resin, and a diallyl phthalate resin. Further, for example, a luminescent molecule can be introduced into the polymer so that the polymer has a luminescence, and example of the polymer include polycarbonate (PC), polyarylate (PAR) such as amorphous polyarylate, and polyether sulfonic acid (PES). In addition, for the polymer being the molded body, the molded body can be altered into a light emission layer or a positive hole layer. Examples of the polymer to be altered into a light emission layer include polyparaphenylene vinylene (PPV), polythiophene (PAT), polyfluorene (PF), and polyparaphenylene (PPP). Examples of the polymer to be altered into a positive hole layer include PEDOT/PSS and polyaniline/PSS.

Examples of the field include fields of electrical and electronic materials (such as a printed board), automobile parts, washing parts, amusement, electromagnetic shielding materials, heat transfer materials, heat absorbing members, flexible devices, and wearable devices. Examples of the field further include optical fields such as cameras, players such as CDs and DVDs, televisions such as projection televisions, contact lens, eyeglasses, cells such as blood analysis cells, and covers for LED lens. Further, the field can further be, for example, regenerative medicine. Non-limiting examples of the polymer used in these field include PBA, PET, PC, an epoxy resin, a liquid crystalline polyester, and fluorine.

(13) Applications of Adhesion Laminate

The application of the adhesion laminate according to the present invention is not particularly limited, and may be used in any application. The adhesion laminate according to the present invention is applicable to various fields such as, for example, fields of transportation materials (automobiles, aircraft), electronic devices, building materials, medical devices, food packaging materials, pharmaceutical packaging materials, groceries, daily necessities, and large structures. Specifically, in recent years, from the viewpoint of weight reduction of transportation materials, multi-materialization, and the like, demands for adhesion with different materials have been increasing in the fields of automobiles, aircraft, and the like. According to the present invention, for example, even a resin material (polymer) which is hydrophobic and poor in adhesiveness can be adhered to different materials such as aluminum, and it is possible to meet the demands.

In the present invention, for example, polymers used in various fields are altered to have desired properties. Thus, the adhesion laminate according to the present invention is applicable to the various fields.

Examples

Examples of the present invention will be described below in more detail. The present invention, however, is by no means limited thereby.

Reference Example A

As Reference Example A, alteration treatment (surface-treating) using a liquid reaction system was performed.

Reference Example A1

As an organic phase, a fluorous solvent ($CF_3(CF_2)_4CF_3$) was used. Sodium chlorite ($NaClO_2$) which is a source of the dioxide radical and HCl which is an acid were dissolved in an aqueous solvent ($H_2O$), thereby preparing an aqueous phase. In the aqueous phase, the final concentration of sodium chlorite was 500 mmol/L, and the final concentration of HCl was 500 mmol/L. 2 mL of the aqueous phase and 5 mL of the organic phase were placed in the same reaction container to contact with each other, thereby generating a double-phase reaction system. In the double-phase reaction system, the organic phase of the fluorous solvent was a lower layer, and the aqueous phase was an upper layer. Then, a polypropylene film was introduced into the reaction container. The film sank to the organic phase which was the lower layer. The size of the film was 50 mm in length × 20 mm in width × 0.2 mm in thickness. The film was obtained by heat-pressing 3 g of polypropylene pellets (trade name: Prime Polypro (registered trademark), manufactured by Prime Polymer Co., Ltd.) at 160°C and 20 MPa for 10 minutes to mold. Then, the double-phase reaction system was irradiated with light for 30 minutes with an LED lamp (60 W, manufactured by PiPhotonics, Inc.) at a wavelength $\lambda$ = 360 nm at room temperature (about 25°C) in atmosphere without pressurization and decompression. The light irradiation was performed on the entire surface of the film in the organic phase from the side surface of the organic phase. At this time, the color of the organic phase was changed to yellow. This change confirmed that the chlorine dioxide radicals generated in the aqueous phase were dissolved in the organic phase. Then, the reaction was completed when the yellow coloration of the organic phase disappeared after 30 minutes from the start of the light irradiation.

Then, after the light irradiation, the surface of the film that had been irradiated with light was subjected to IR spectroscopy. Further, as a comparative example, prior to light irradiation, the film was subjected to IR spectroscopy in the same manner. The results are shown in FIGS. 2A and 2B. FIG. 2A shows the result before the light irradiation, and FIG. 2B shows the result after the light irradiation. In this reference example and all of the following reference examples and examples, FT/IR-4700 (trade name, manufactured by JASCO Corporation) with ATR PRO ONE (trade name, manufactured by JASCO Corporation) and a diamond prism attached was used as an IR spectrometer.

As shown in FIG. 2B, peaks representing a hydroxyl (-OH) and carbonyl (-C(=O)-) included in carboxyl (-COOH) were observed, which were not observed in FIG. 2A showing the result before the light irradiation. This result confirmed that in the polypropylene film, methyl in the side chain of the polymer was oxidized into hydroxymethyl ($-CH_2OH$) and carboxy (-COOH), i.e., the surface of the film was altered.

Reference Example B

As Reference Example B, alteration treatment (surface-treating) using a gas phase reaction system was performed.

Reference Example B1

4 mL of fluorous solvent ($CF_3(CF_2)_4CF_3$), 2 mL of water ($H_2O$), 90 mg of sodium chlorite ($NaClO_2$), and 20 $\mu$L of 35% hydrochloric acid (HCl) were placed in the same reaction container, and were then stirred for 5 minutes. Thereafter, the reaction container was left to stand, thereby separating an organic phase of the fluorous solvent, an aqueous phase, and a gas phase. It was observed that the organic phase became yellow, and a white gas was generated in the gas phase. The chlorine dioxide radicals are generated in the aqueous phase, and dissolved in the organic phase (fluorous solvent) which is more stable. In other words, since the change in color of the organic phase to yellow means generation of chlorine dioxide radicals, the generation of the chlorine dioxide radicals was confirmed in this reference example. Then, the chlorine dioxide radicals flow out as a white gas from the gas phase when the dissolution in the organic phase exceeds a limit amount. In other words, since the generation of the white gas in the gas phase means the presence of chlorine dioxide radicals in the gas phase, the presence of chlorine dioxide radicals in the gas phase was confirmed in this reference example.

Then, a polyethylene plate (product No. 2-9217-01, manufactured by AS ONE Corporation) was introduced into the reaction container. The size of the polyethylene plate was 50 mm in length × 15 mm in width × 1 mm in thickness. FIG. 3 is a schematic view illustrating the state where the polyethylene plate is placed in the reaction container. As shown in FIG. 3, an organic phase 1, an aqueous phase 2, and a gas phase 3 in the reaction container 4 were separated in this order. Further, the lower portion of the polyethylene plate (PE plate) 5 was immersed in the organic phase 1, and the upper portion was exposed to the gas phase 3. Then, the reaction container was used as an opened system without covering with a lid, and was irradiated with light with a xenon lamp (manufactured by Ushio Inc., 500 W, with a Pyrex (registered trademark) glass filter) at a wavelength of $\lambda$ > 290 nm at room temperature (about 25°C) in atmosphere without pressurizing or decompressing the inside of the reaction container. It was observed that during the light irradiation, the gas phase 3 continuously generated a white gas, the aqueous phase 2 generated chlorine dioxide radicals, and the dissolution of the chlorine dioxide radicals in the organic phase 1 exceeded a limit amount, and the chlorine dioxide

radicals flowed out into the gas phase 3. The light irradiation on the polyethylene plate was performed by irradiating the surface of the polyethylene plate exposed to the gas phase in the reaction container 4 with light. Specifically, the surface of the polyethylene plate 5 was irradiated with parallel light from 25 cm away from the surface such that the parallel light is perpendicular to the surface. Then, the reaction was completed when the yellow coloration of the organic phase disappeared after 30 minutes from the start of the light irradiation.

Then, after the light irradiation, the surface of the polyethylene plate which had been irradiated with light was subjected to infrared spectroscopy (IR). Further, as a comparative example, prior to light irradiation, the polyethylene plate was subjected to IR spectroscopy in the same manner. A peak representing carboxy (-COOH) (at around 1700 $cm^{-1}$) was observed in the result obtained with the light irradiation, which was not observed in the result obtained without light irradiation. This result confirmed that in the polyethylene plate, the C-H bond of polyethylene (at around 2900 $cm^{-1}$) was oxidized to carboxy (at around 1700 $cm^{-1}$), i.e., the surface of the polyethylene plate was altered.

Reference Example B2

An alteration treatment (surface-treating) was performed using a gas phase reaction system in the same manner as in Reference Example B1 except that polypropylene was used as a substitute for the polyethylene.

(1) Polypropylene Film

A polypropylene film was used as a substitute for the polyethylene plate. The polypropylene film was obtained by heat-pressing 3 g of polypropylene pellets (trade name: Prime Polypro (registered trademark), manufactured by Prime Polymer Co., Ltd.) at 160°C and 20 MPa for 10 minutes to mold. The polypropylene film cut into 50 mm in length × 15 mm in width × 0.3 mm in thickness was used. Then, after the light irradiation, the surface of the polypropylene film that had been irradiated with light was subjected to IR spectroscopy in the same manner as in Reference Example B1. Further, as a comparative example, prior to light irradiation, the polypropylene film was subjected to IR spectroscopy in the same manner. A peak representing carboxy (-COOH) (at around 1700 $cm^{-1}$) was observed in the result obtained with the light irradiation, which was not observed in the result obtained without light irradiation. This results confirmed that in the polypropylene film, methyl ($-CH_3$) (at around 2900 $cm^{-1}$) in the side chain of polypropylene and the C-H bond (at around 2900 $cm^{-1}$) included in the main chain of polypropylene were oxidized to carboxy (-COOH) (at around 1700 $cm^{-1}$), i.e., the surface of the polypropylene film was altered.

Reference Example B3

An alteration treatment (surface-treating) was performed using a gas phase reaction system in the same manner as in Reference Example B1 except that a polymethylmethacrylate (PMMA) plate was used as a substitute for the polyethylene plate.

The PMMA plate (item code: 2-9208-01, manufactured by AS ONE Corporation) used was one having 50 mm in length × 15 mm in width × 1 mm in thickness. After the light irradiation, the surface of the PMMA plate that had been irradiated with light was subj ected to IR spectroscopy in the same manner as in Reference Example B1. Further, as a comparative example, prior to light irradiation, the PMMA plate was subjected to IR spectroscopy in the same manner. As a result, a peak at around 1700 $cm^{-1}$ after the light irradiation was widened as compared with that before the light irradiation, i.e., broadening of the shoulder peak was observed. The peak corresponds to a carbonyl (-C (= O)-) included in an ester group (-COOR), a carboxy (-COOH), and the like. This result confirmed that in the PMMA plate, the C-H bond included in methyl ($-CH_3$) in the side chain of PMMA was oxidized to carboxy (-COOH), i.e., the surface of the PMMA plate was altered.

Reference Example B4

An alteration treatment (surface-treating) was performed using a gas phase reaction system in the same manner as in Reference Example B1 except that a polydimethylsiloxane (PDMS) film was used as a substitute for the polyethylene plate.

The PDMS film (trade name: Sylgard 184, manufactured by Dow Toray Co., Ltd.) used was one having 40 mm in length × 15 mm in width × 1 mm in thickness. After the light irradiation, the surface of the PDMS film that had been irradiated with light was subjected to IR spectroscopy in the same manner as in Reference Example B1. Further, as a comparative example, prior to light irradiation, the PDMS film was subjected to IR spectroscopy in the same manner. As a result, a peak at around 1700 $cm^{-1}$ was not observed before the light irradiation, whereas a peak at around 1700 $cm^{-1}$ was observed after the light irradiation. The peak corresponds to a carboxy (-COOH). This result confirmed that in the PDMS film, methyl ($-CH_3$) (a peak at around 2900 $cm^{-1}$) in the side chain of PDMS and the C-H bond (a peak at

around 2900 $cm^{-1}$) in the main chain of PDMS were oxidized to carboxy (-COOH) (a peak at around 1700 $cm^{-1}$), i.e., the surface of the PDMS film was altered.

Reference Example B5

An alteration treatment (surface-treating) was performed using a gas phase reaction system in the same manner as in Reference Example B1 except that a polycarbonate (PC) plate was used as a substitute for the polyethylene plate.
The polycarbonate (PC) plate (item code: 2-9226-01, manufactured by AS ONE Corporation) used was one having 50 mm in length × 15 mm in width × 1 mm in thickness. After the light irradiation, the surface of the PC plate that had been irradiated with light was subjected to IR spectroscopy in the same manner as in Reference Example B1. Further, as a comparative example, prior to light irradiation, the PC plate was subjected to IR spectroscopy in the same manner. As a result, a peak at around 1700 $cm^{-1}$ after the light irradiation was widened as compared with that before the light irradiation, i.e., broadening of the shoulder peak was observed. The peak corresponds to a carbonyl (-C(=O)-) included in a carbonate group (-O-(C=O)-O-), a carboxy (-COOH), and the like. This result confirmed that in the PC plate, the C-H bond included in methyl ($-CH_3$) in the side chain of PC was oxidized to carboxy (-COOH), i.e., the surface of the PC plate was altered.

Reference Example B6

An alteration treatment (surface-treating) was performed using a gas phase reaction system in the same manner as in Reference Example B1 except that a liquid crystal polymer (LCP) plate (liquid crystalline polyester) was used as a substitute for the polyethylene plate.
The LCP plate (trade name: 6030g-mf, manufactured by Ueno Fine Chemicals Industry, Ltd.) used was one having 50 mm in length × 15 mm in width × 1 mm in thickness. After the light irradiation, the surface of the LCP plate that had been irradiated with light was subjected to IR spectroscopy in the same manner as in Reference Example B1. Further, as a comparative example, prior to light irradiation, the LCP plate was subjected to IR spectroscopy in the same manner. As a result, a peak at around 1700 $cm^{-1}$ after the light irradiation was widened as compared with that before the light irradiation, i.e., broadening of the shoulder peak was observed. The peak corresponds to a carbonyl (-C(=O)-) included in an ester group (-COOR), a carboxy (-COOH), and the like. This result confirmed that in the LCP plate, the C-H bond included in LCP was oxidized to carboxy (-COOH), i.e., the surface of the LCP plate was altered.

Reference Example B7

A polypropylene (PP) film was subjected to alteration treatment (surface-treating) in a gas phase reaction system using a reaction system shown in a perspective view of FIG. 4.

(Reference Example B7-1)

As shown in FIGS. 2A and 2B, as a reaction container 22, an H-shaped container having two cylindrical containers connected by a passage was used. The reaction container 22 was made of glass, and the two cylindrical containers each had an inner diameter of 10 mm and a depth of 70 mm. The passage was 8 mm in inner diameter and 15 mm in length, and the depth from the bottom inside the passage to the bottom inside each of the cylindrical containers was 50 mm.
As shown in FIGS. 2A and 2B, an acidic aqueous hydrochloric acid ($NaClO_2$) solution 21 was placed in one of the cylindrical containers of the reaction container 22, and a PP film (polymer) 11A was placed in the other cylindrical container. As the acidic aqueous hydrochloric acid ($NaClO_2$) solution 21, an aqueous solution obtained by mixing $H_2O$ (7 mL), $NaClO_2$ (50 mg), and 35% HClaq. (50 μL) was used. As the PP film 11A, a film obtained by cutting the same PP film used in Reference Example B2 into 50 mm in length × 10 mm in width × 0.2 mm in thickness was used. In this condition, the reaction container 22 was sealed with a lid 23, and the acidic aqueous hydrochloric acid ($NaClO_2$) solution 21 was then irradiated with light of the power of 60 W from the side surface of the reaction container 22 for 5 minutes. A light source used was an LED lamp with a wavelength of 365 nm. The distance between the light source and the reaction container 22 was 20 cm. Chlorine dioxide radicals generated by the light irradiation carried out surface-treating by reacting with the surface of the PP film 11A. The reaction was performed at room temperature in atmosphere, without pressurization and decompression. The reaction was completed when the yellow coloration of the $NaClO_2$ solution derived from the $ClO_2$ radicals disappeared. After completion of the reaction, the PP film 11A was washed with purified water and dried under reduced pressure overnight. In this manner, the PP film 11A was subjected to an alteration treatment (surface-treating).

(Reference Example B7-2)

A PP film 11A was subj ected to alteration treatment (surface-treating) in the same manner as in Reference Example B7-1 except that the cylindrical container containing the PP film 11A in the reaction container 22 was covered with aluminum to shield from light, so that the PP film 11A was not exposed to light. Specifically, in this example, the surface-treating was performed with the reaction system in the surface-treating (the cylindrical container containing the PP film 11A in the reaction container 22) not irradiated with light and only the radical generation reaction system (the cylindrical container containing the acidic aqueous hydrochloric acid ($NaClO_2$) solution 21 in the reaction container 22) irradiated with light.

(Measurement of IR Spectrum)

IR spectra (infrared absorption spectra) were measured for the PP films 11A of Reference Examples B7-1 and B7-2 before (before the surface-treating) and after (after the surface-treating) the reaction. The conditions for IR measurement were the same as described above. As a result, in both of Reference Examples B7-1 and B7-2, the peak intensity at around 2900 $cm^{-1}$ decreased and the peak intensity at around 1700 $cm^{-1}$ increased after the reaction as compared with those before the reaction. This result implies that the methyl on the surface of the PP film 11A was oxidized into the carboxy. Further, Reference Example B7-2 demonstrates that in the surface-treating, the reaction proceeds without irradiation of the reaction system of the surface-treating with light.

The results of the measurement of the IR spectra of Reference Example B7-1 are shown in Table 4 below. Table 5 also shows the measurement results of the PP film 11A before the reaction as a control together with the results for changes in reaction time of the surface-treating to 10 minutes and 60 minutes. As shown in Table 4 below, the ratio C = O/C-H of an area of a peak derived from C = O stretching at 1700 to 1800 $cm^{-1}$ to an area of a peak derived from C-H stretching at 2800 to 3000 $cm^{-1}$ was considerably increased compared to the area before the reaction for the reaction time of both 10 minutes and 60 minutes.

Table 4

| | C = O Peak Area (1700 to 1800 $cm^{-1}$) | C-H Peak Area (2800-3000 $cm^{-1}$) | C=O/C-H |
|---|---|---|---|
| Before Reaction | 0.064 | 19.3 | 0.003 |
| 10 min | 0.84 | 22.1 | 0.038 |
| 60 min | 0.71 | 21.9 | 0.032 |

(Measurement of Contact Angle with Water)

The contact angles of the PP films of Reference Example B7-1 and B7-2 with water were measured using Drop Master DM300 (trade name, manufactured by Kyowa Interface Science Co., Ltd.). In the above measurement, 1 microliter of pure water was added dropwise on the surface of the object to be measured, and the contact angle after 2 seconds of the addition was calculated by a static contact angle method using FAMAS (trade name, manufactured by Kyowa Interfacial Science Co., Ltd.) as analysis software. In all of the following reference examples and examples, the contact angle with water was measured by the same method using the same device as in this reference example.

The measurement results of the contact angle with water in Reference Example B7-1 are shown in Table 5 below. Table 5 also shows the measurement results of the PP film 11A before the reaction as a control together with the results for changes in reaction time of the surface-treating to 10 minutes and 60 minutes. As shown in Table 5 below, the contact angle was about 20° or more smaller than that before the reaction at both 10 and 60 minutes of the reaction time. This confirmed that hydrophilicity of the PP film 11A was increased by the surface-treating.

Table 5

| | Contact Angle |
|---|---|
| Before Reaction | 107° |
| 10 min | 88° |
| 60 min | 83° |

Table 6 and Table 7 below show the results of the IR measurement and the measurement of the contact angle

with water of Reference Example B7-1 (with irradiation of the PP film 11A with light) and Reference Example B7-2 (without irradiation of the PP film 11A with light). In Tables 6 and 7, the reaction time for the surface-treating was 10 minutes. As shown in Tables 6 and 7 below, neither Reference Example B7-1 nor Reference Example B7-2 changed the C = O/C-H and the contact angle with water. This confirmed that, in the surface-treating, the number of C = O bonds and hydrophilicity increased without irradiation of the PP film 11A with light as well as with the light irradiation.

Table 6

| | C = O Peak Area (1700 to 1800 $cm^{-1}$) | C-H Peak Area (2800-3000 $cm^{-1}$) | C = O/C-H |
|---|---|---|---|
| With Light Irradiation | 0.84 | 22.1 | 0.038 |
| Without Light Irradiation | 0.79 | 22.7 | 0.035 |

Table 7

| | Contact Angle |
|---|---|
| With Light Irradiation | 88° |
| Without Light Irradiation | 89° |

Reference Example B8

In the following manner, a polylactic acid (PLA) film was subjected to alteration treatment (surface-treating) in a gas phase reaction system.

An acidic aqueous hydrochloric acid ($NaClO_2$) solution was placed in a small petri dish (30 mm in diameter × 10 mm in depth) as a reaction container. As the acidic aqueous hydrochloric acid ($NaClO_2$) solution, an aqueous solution obtained by mixing $H_2O$ (7 mL), $NaClO_2$ (1000 mg), and 35% HClaq. (1000 μL) was used. This small petri dish and the polylactic acid (PLA) film were placed in a large petri dish (700 mm in diameter × 180 mm in depth). The polylactic acid (PLA) film was obtained by heat pressing 3 g of polylactic acid pellets (trade name: 2003D (registered trademark), manufactured by Nature Works) at 170°C and 10 MPa for 10 minutes. The PLA film cut into 50 mm in length × 10 mm in width × 0.3 mm in thickness was used. Thereafter, the large petri dish was covered with a lid and pre-heated at 70°C for 5 minutes. Then, while the heating was continued, light of the power of 60 W was applied from above the lid for 5 minutes. A light source used was an LED lamp with a wavelength of 365 nm. The distance between the light source and the large petri dish was 20 cm. Chlorine dioxide radicals generated by the light irradiation were surface-treated by reacting with the surface of the PLA film. The reaction was performed at room temperature in normal atmosphere, without pressurization and decompression. The reaction was completed when the yellow coloration of the $NaClO_2$ solution derived from the $ClO_2$ radicals disappeared. After completion of the reaction, the PLA film was washed with purified water and dried under reduced pressure overnight. In this manner, the PLA film was subjected to alteration treatment (surface-treating).

Under the reaction conditions of the surface-treating, the reaction was performed with the change in reaction time to 0 minutes (i.e., unreacted), 10 minutes, and 30 minutes, and then the IR measurement was performed. The conditions for IR measurement were the same as described above. The result confirmed that by the surface-treating, hydrophilic functional groups such as alcoholic hydroxyl (C-OH) and carboxy (COOH) increased on the surface of the PLA film.

Reference Example B9

An alteration treatment (surface-treating) using a gas phase reaction system was performed in the same manner as in Reference Example B8 except that an ABS resin film was used as a substitute for the polylactic acid (PLA) film. Further, it was confirmed that the surface was subjected to the alteration treatment (oxidization) in the same manner as in Reference Example B8 to increase the hydrophilic functional group.

Reference Example B10

The surface of a polypropylene (PP) plate was selectively reacted with halogen oxide radicals to perform alteration treatment (surface-treating). Whether the surface of the PP plate was selectively oxidized (subjected to alteration treatment) was determined by binding toluidine blue to the surface.

10 mL of fluorous solvent ($CF_3(CF_2)4CF_3$), 20 mL of water ($H_2O$), 200 mg of sodium chlorite ($NaClO_2$), and 200 μL of 35% hydrochloric acid (HCl) were placed in a transparent petri dish which was a reaction container, which was then stirred for 5 minutes. The reaction container was left to stand, thereby separating an organic phase of the fluorous solvent, an aqueous phase, and a gas phase. It was confirmed that $ClO_2$ radicals generated in the aqueous phase were transferred to the organic phase when the organic phase was colored in yellow. Then, a PP plate (manufactured by AS ONE Corporation, product No. 2-9221-01) was introduced into the reaction container. The size of the PP plate was 50 mm in length, 30 mm in width, and 1 mm in thickness. FIG. 5A is a schematic view illustrating a state in which the PP plate is placed in the reaction container. In the reaction container 4, an organic phase 1, an aqueous phase 2, and a gas phase 3 in the reaction container 4 were separated in this order, and the PP plate 5 was immersed in the organic phase 1.

Then, the reaction container was covered with a lid. A light source was disposed below a transparent table so as to face upward, and three black rectangular pieces of paper as masking members were disposed on the transparent table at regular intervals. Then, the reaction container was placed on the masking members. FIG. 5B illustrates a positional relationship among the reaction container 4, the PP plate 5, and the masking member 6. FIG. 5B is a plan view of the reaction container 4 viewed from above. The reaction container on the transparent table were irradiated with light from the light source below the transparent table. Since the masking members were disposed below the reaction container, only regions of the lower surface of the PP plate 5 in the reaction container where the masking members were not disposed were irradiated with light. The distance between the light source and the PP plate 5 was 20 cm. The light source used was an LED lamp (manufactured by Bio-Photonics Inc.) with a wavelength of 365 nm. The light irradiation was performed at room temperature (about 25°C) in atmosphere without pressurizing and decompressing the inside of the reaction container. Then, after 30 minutes from the start of the light irradiation, the yellow coloration derived from the $ClO_2$ radicals of the organic phase in the reaction container disappeared, and the reaction was terminated.

Next, 50 ml of a 0.05% toluidine blue solution in water of blue dye was prepared, and then PP plate 5 that had been oxidized by the $ClO_2$ radicals was placed in the reaction container. After sonication at room temperature for 1 minute, the PP plate 5 was taken out, and washed with water.

FIG. 6 shows a photograph of the obtained PP plate 5. As shown in FIG. 6, it was observed that toluidine blue bonded to portions 7 of the PP plate 5 where the masking members 6 were not disposed. Even though the aqueous toluidine blue solution was brought into contact with the entire surface of the PP plate 5, the binding of toluidine blue could be observed only in the regions where the masking members 6 were not disposed. As can be seen from the result, only regions where the masking members were not disposed were oxidized (hydrophilized) by selective light irradiation with masking in the presence of the $ClO_2$ radicals.

In addition, polypropylene (PP) particles, a polypropylene (PP) film, substantially cylindrical bodies of high density polyethylene (PE) pellets, and a polystyrene (PS) plate, used as a substitute for the PP plate, were treated in the same manner as in this reference example, and it was confirmed that the same selective surface treatment could be performed.

Reference Example B11

A PP film was subjected to alteration treatment (surface-treating) in the same manner as in Reference Example B8 except that the same PP film as the PP film 11A of Reference Example B7-1 was used as a substitute for the PLA film, and the surface-treating was performed while the PP film was heated at the reaction temperature kept at 60°C or 90°C. Tables 8 and 9 below show the results of the IR spectroscopy of the PP films after the surface-treating and the results of the measurements of the contact angles with water together with those of Reference Example B7-1. "25°C" shows the results of the measurement of Reference Example B7-1 (without heating). As shown in Table 8 and Table 9 below, it was confirmed that even in this reference example where the PP film 11A was subjected to the surface-treating while heating, the number of C = O bonds increased, and the hydrophilicity increased as in Reference Example B7-1 where heating was not performed.

Table 8

| | C = O Peak Area (1700 to 1800 $cm^{-1}$) | C-H Peak Area (2800-3000 $cm^{-1}$) | C = O/C-H |
|---|---|---|---|
| 25°C | 0.84 | 22.1 | 0.038 |
| 60°C | 0.76 | 18.8 | 0.040 |
| 90°C | 3.35 | 17.8 | 0.188 |

Table 9

| | Contact Angle |
|---|---|
| 25°C | 88° |
| 60°C | 100° |
| 90°C | 95° |

Reference Example B12

A polylactic acid (PLA) film was subjected to alteration treatment (surface-treating) in the same manner as in Reference Example B8 except that the reaction temperature in the surface-treating was changed to 25°C (room temperature), 60°C, 70°C, and 80°C, and the reaction time in the surface-treating was fixed to 10 minutes. The result of the IR measurement confirmed that by the surface-treating, hydrophilic functional groups such as alcoholic hydroxyl (C-OH) and carboxy (COOH) increased on the surface of the PLA film.

The contact angles of the respective PLA films after alteration treatment (surface-treating) with water were measured. The results are shown in Table 10 below. Table 10 further shows, as a control, the measurement results before the reaction (before surface-treating). As shown in Table 10, at any reaction temperature, the contact angle with water was considerably reduced compared with that before the reaction temperature. The result confirmed the hydrophilization of the surface of the PLA films.

Table 10

| | Contact Angle |
|---|---|
| Before Reaction | 90° |
| 25°C | 75° |
| 60°C | 65° |
| 70°C | 49° |
| 80°C | 52° |

Reference Example B13

The alteration treatment (surface-treating) was performed using a gas phase reaction system in the same manner as in Reference Example B7-1 except that a plate of polycarbonate, an ABS resin, polyethylene naphthalate, or polyethylene was used as a substitute for the PP film 11A. The size of each plate was 50 mm in length, 15 mm in width, and 1 mm in thickness. Then, the contact angles of the respective plates with water before the reaction (before the surface-treating) and after the reaction (after the surface-treating) were measured. Table 11 below shows the plates used and the results of the measurement of the contact angles with water. As shown in Table 11 below, the contact angles with water after the surface-treating decreased. This confirmed that the surfaces of the plates (polymers) were hydrophilized.

Table 11

| | Contact Angle | |
|---|---|---|
| | Before Reaction | After reaction |
| Polycarbonate (Product No: 2-9224-01, manufactured by AS ONE Corporation) | 88° | 64° |
| ABS Resin (Product No. 2-9227-01, manufactured by AS ONE Corporation) | 95° | 62° |
| Polyethylene Naphthalate (Product No. 3-2162-01, manufactured by AS ONE Corporation) | 90° | 74° |
| Polyethylene (Product No. 2-9215-01, manufactured by AS ONE Corporation) | 91° | 79° |

Reference Example B14

A polypropylene (PP) film was subjected to alteration treatment (surface-treating) in a gas phase reaction system using a reaction system shown in a cross-sectional view of FIG. 10.

As shown in FIG. 4, a cylindrical container was used as a reaction container 102 for generating chlorine dioxide $ClO_2$. The reaction container 102 was made of glass and had an inner diameter of 100mm and a depth of 200 mm. Further, a sealed cylindrical container was used as a reaction container 104 for alteration treatment (surface-treating) of the polymer. The reaction container 104 was made of glass and had an inner diameter of 200 mm and a depth of 30 mm. Further, a passage 105 connecting the reaction containers 102 and 104 was made of Teflon (trade name: polytetrafluoroethylene) and had an inner diameter of 5 mm and a length of 100 mm.

As shown in FIG. 4, an acidic aqueous hydrochloric acid ($NaClO_2$) solution 101 was placed at the bottom of the reaction container 102, and a PP film (polymer) 111 was placed in the other reaction container 104. As the acidic aqueous hydrochloric acid ($NaClO_2$) solution 101, an aqueous solution obtained by mixing $H_2O$ (50 mL), $NaClO_2$ (200 mg), and 35% HClaq. (100 $\mu$L) was used. As the PP film 111, a film obtained by cutting the same PP film used in Reference Example B2 into 50 mm in length $\times$ 10 mm in width $\times$ 0.2 mm in thickness was used. In this state, the reaction container 102 was sealed with a lid 103. In the acidic aqueous hydrochloric acid ($NaClO_2$) solution 101, $ClO_2$ generated by reacting $NaClO_2$ (200 mg) and HCl with each other is dissolved. In this state, air 106 was blown into the acidic aqueous hydrochloric acid ($NaClO_2$) solution 101 at a flow rate of 0.2 L/min using an air pump as shown in FIG. 4. Accordingly, $ClO_2$ 107 was expelled from the acidic aqueous hydrochloric acid ($NaClO_2$) solution 101 and flowed into the passage 105. In this state, the passage 105 was continuously irradiated with light of the power of 60 W. A light source used was an LED lamp with a wavelength of 365 nm. The distance between the light source and the passage 105 was 20 cm. By this light irradiation, $ClO_2$ was activated to be $ClO_2$ radicals (chlorine dioxide radicals). The chlorine dioxide radicals flowing into the reaction container 104 reacted with the surface of the PP film 111, thereby performing surface treatment. The reaction was performed at room temperature in atmosphere, without pressurization and decompression. The reaction was completed when the yellow coloration of the $NaClO_2$ solution derived from the $ClO_2$ radicals disappeared. After completion of the reaction, the PP film 111 was washed with purified water and dried under reduced pressure overnight. In this manner, the PP film 111 was subjected to alteration treatment (surface-treating).

As described above, in this reference example (Reference Example B14), the $ClO_2$ gas was activated by light irradiation to be chlorine dioxide radicals, while a reaction system containing chlorine dioxide radicals (halogen oxide radicals) and the PP film 111 (polymer) was not irradiated with light. Even in the case in which the length of the passage 105 was 1000 m (1 m), the surface of the PP film 111 could be altered by alteration treatment (surface-treating).

Example 1

A surface of a polylactic acid (PLA) film was plated with nickel in the following manner, thereby producing a metal-plated polymer.

In this example, liquids A, B, and C were used.

Liquid A: The liquid A was prepared by adding 35% HClaq. (0.1 mL) to purified water (50 mL), and further dissolving stannous chloride (SnCh) (0.1 g) in the resultant solution.

Liquid B: The liquid B was prepared by dissolving palladium chloride (PdCh) (0.01 g) in 35% HClaq. (0.1 mL) and further adding purified water (50 mL) to the resultant solution.

Liquid C: The liquid C was prepared by dissolving nickel sulfate hexahydrate (2.63 g), glycine (1.50 g), and sodium hypophosphite monohydrate (2.12 g) in purified water (95 mL) in this order, adjusting the pH of the resultant solution to 5.0, and then further adding purified water to adjust the total amount of the solution to 100 mL.

First, the PLA film which had been subjected to alteration treatment in Reference Example B8 (after the surface-treating) was immersed in the liquid A for 2 minutes, washed with water, then further immersed in the liquid B, and further washed with water. This was repeated a total of two times, thereby supporting a catalyst (stannous chloride and palladium chloride) on the altered surface of the PLA film. Thereafter, the catalyst-supported PLA film was immersed in the liquid C which had been heated at 70°C, and then left to stand for one hour (60 minutes), thereby precipitating metal nickel on the altered surface (catalyst-supported surface). In this manner, the surface of the PLA film was plated with nickel (plating), thereby producing a metal-plated polymer.

FIG. 7 shows a photograph of metal-plated polymers produced in this example. "Oxidized" on the right side of FIG. 7 shows a photograph of the metal-plated polymer of this example, the metal-plated polymer having been altered (oxidized) by the surface-treating of Reference Example B8. Further, "Untreated" on the left side of FIG. 7 is a photograph of an example (comparative example) in which a PLA film which has not been treated (has not been subjected to the surface-treating) as substitute for the PLA film of Reference Example B8 was treated in the same manner as in this

example. As shown in FIG. 7, the untreated PLA film could not be plated while the PLA film which had been subjected to alteration treatment in Reference Example B8 (after the surface-treating) could be plated with nickel in this example. In other words, it was demonstrated that the metal-plated polymer production method according to the present invention could plate, with metal, PLA films which were difficult to plate by a commonly used method.

Example 2

A metal-plated polymer was produced in the same manner as in Example 1 except that a polypropylene (PP) film which had been subjected to alteration treatment in Reference Example B7-2 (after the surface-treating) was used as a substitute for the PLA film which had been subjected to alteration treatment in Reference Example B8 (after the surface-treating). Metal-plated polymers were produced with changes in the immersion time for the PP film in the liquid C to 3 minutes, 10 minutes, and 30 minutes, and 60 minutes.

The metal-plated polymers plated with nickel in this example were subjected to the cross-cut test. The test tape used was an adhesive tape defined in JIS Z 1522 (adhesive strength: about 8 N per 25 mm in width) with a nominal width of 12 to 19 mm. The test was specifically performed in the following steps (1) to (3). As a comparative example, the same treatment was performed in the same manner as in this example except that an untreated PP film (which had not been subjected to the surface-treating) was used, thereby producing metal-plated polymers, which was then subjected to the same cross-cut test.

(1) In a part to be subjected to a tape test in the plated surface, stripe cuts reaching the base (PP film) were made with a cutter so as to form a square having a side of 2 mm.
(2) A test tape adhered to the plated surface while leaving 30 to 50 mm of an un-taped part. At this time, while taking care not to form air bubbles, the test tape was pressed with a finger for about 10 seconds.
(3) The tape for the part left in the item (2) above was pinched with fingers, and pulled strongly in a direction perpendicular to the plated surface to peel off the tape instantaneously.

As a result of the cross-cut test, in the comparative example (untreated PP film), a metal nickel layer formed by the plating adhered to the tape and peeled off. In contrast, as a result of using the PP films which had been subjected to alteration treatment in Reference Example B7 (after the surface-treating), each metal nickel layer formed by plating was hardly peeled off at each of the immersion times of 3 minutes, 10 minutes, 30 minutes, and 60 minutes in the liquid C.

Example 3

A metal-plated polymer was produced in the same manner as in Example 1 except that a polycarbonate (PC) film which had been subjected to alteration treatment in Reference Example B5 (after the surface-treating) was used as a substitute for the PLA film which had been subjected to alteration treatment in Reference Example B8 (after the surface-treating). When the plated surface of this metal-plated polymer was connected to an electrode and a battery and was further connected to an LED lamp, the LED lamp was lit up. Thus, the electroconductivity of the plated surface was confirmed. That is, the surface of the PC film could be plated with nickel in this example. Further, the metal-plated polymer of this example was subjected to a peel test by the Scotch tape (trade name) test, and peeling of the metal nickel layer formed by the plating was not observed.

Example 4

A metal-plated polymer was produced in the same manner as in Example 1 except that an ABS resin film which had been subjected to alteration treatment in Reference Example B9 (after the surface-treating) was used as a substitute for the PLA film which had been subjected to alteration treatment in Reference Example B8 (after the surface-treating). Thus, the surface of the film could be plated with nickel. Further, as a comparative example, an untreated ABS resin film (which had not been subjected to the surface-treating) as a substitute for the ABS resin film of Reference Example B9 was plated with nickel in the same manner as in this example. The metal-plated polymers of this comparative example and this example were subjected to a peel test by the Scotch tape (trade name) test. The results showed that the metal nickel layer of the metal-plated polymer of this example was not peeled, whereas the metal nickel layer of the untreated ABS resin film of the comparative example was peeled off.

Example 5

In the following manner, a polypropylene (PP) film and an aluminum plate adhered to each other, thereby producing an adhesion laminate.

As shown in the perspective view of FIG. 8, a single altered PP film 42 was sandwiched between two aluminum plates 43 (50 mm in length × 15 mm in width × 0.5 mm in thickness). The altered PP film 42 used was one obtained by cutting the PP film 11A which had been subjected to alteration treatment in Reference Example B7-2 (after surface-treating) into 5 mm squares. The altered PP film 42 had altered surfaces (surfaces reacted in the surface-treating) on both sides. Then, in the state shown in FIG. 8, the polymer and the adherend were pressed at 160°C and 10 MPa for 10 minutes, thereby producing an adhesion laminate of this example.

Further, the adhesion laminates of FIG. 8 were produced by variously changing the reaction time of the surface-treating of the altered PP film 42. Then, tensile tests were performed on each of the samples in the same manner as in Example 6 described later. The results are shown in Table 12 below. In Table 12 below, the reaction time "0 min" represents a control, and shows a case of using a PP film which has not been subjected to surface-treating as a substitute for the altered PP film 42. As shown in Table 12 below, the peel strength was increased by the surface-treating, and it was demonstrated that the altered PP film 42 and the aluminum plate 43 could be strongly adhered without using a primer (undercoat layer) and an adhesive. Further, although the longer the reaction time of the surface-treating, the stronger the peel strength tends to be, the peel strength did not change between 90 minutes and 120 minutes of the reaction time.

Table 12

| Reaction Time | $N/mm^2$ |
|---|---|
| 0 min | 3.2 |
| 10 min | 4.6 |
| 30 min | 10.3 |
| 60 min | 12.9 |
| 90 min | 17.7 |
| 120 min | 17.1 |

An adhesion laminate of FIG. 8 was produced and then subjected to the tensile test in the same manner except that the altered PP film 42 was cut out from the PP film 11A of Reference Example B11 as a substitute for the PP film 11A of Reference Example B7-2. The results are shown in Table 13 below. As described for Reference Example B1, "25°C" indicates the results obtained by using the PP film 11A of Reference Example B7-1. As shown in Table 13 below, since the higher the reaction temperature of the surface-treating was, the stronger the peel strength was, the firm adhesion between the altered PP film 42 and the aluminum plate 43 was confirmed. Although the reason for this is unknown, it is presumed that, for example, the oxidation reaction proceeded to a deeper position of the PP film 11A in surface-treating by the reaction while heating.

Table 13

| Reaction Time | $N/mm^2$ |
|---|---|
| 25°C | 6.4 |
| 60°C | 9.3 |
| 90°C | 25.0 |

Example 6

In the following manner, a polylactic acid (PLA) film and an aluminum plate were adhered to each other, thereby producing an adhesion laminate.

The PLA film after the alteration treatment (surface-treating) of Reference Example B8 was cut into 5 mm squares. This was used as an altered PLA film 41. The reaction time of the surface-treating for the altered PLA film 41 used in this example was 120 minutes. Further, two aluminum plates 43 (50 mm in length × 15 mm in width × 0.5 mm in thickness) were prepared. Then, as shown in the perspective view of FIG. 9, the two altered PLA films 41 were superposed so that the untreated surfaces (unreacted surfaces) were in contact with each other, and were sandwiched between the two aluminum plates 43. Thus, the altered surfaces (surfaces reacted in the surface-treating) of the altered PLA films 41 were in contact with the respective aluminum plates 43. In this state, the laminate was heated at 150°C, and a stainless steel seam roller (manufactured by OTA SEISAKUSHO, NO40040 (trade name) was reciprocated on

the laminate, thereby pressing the laminate with the self-weight of the stainless steel seam roller. Thus, the altered PLA films 41 and the aluminum plates 43 were adhered, thereby producing an adhesion laminate.

The adhesion laminate of the altered PLA films 41 and the aluminum plates 43 produced in the manner described above was subjected to a tensile test. Specifically, first, portions of the two aluminum plates 43 that were not laminated with the altered PLA film 41 were pinched and pulled in opposite directions. Then, the tensile strength ($N/mm^2$) at the time when the altered PLA film 41 and the aluminum plate 43 were peeled off was used as the peel strength. The result showed that the peel strength was 4.8 $N/mm^2$. This confirmed that the altered PLA films 41 and the aluminum plates 43 were adhered firmly without a primer (undercoat layer) and an adhesive. In contrast, in the case in which a laminate was produced in the same manner as in this example using PLA films which had not been subjected to the surface-treating as a substitute for the altered PLA films 41, the aluminum plates were easily peeled from the PLA films, and a tensile test could not be performed.

The tensile test was performed in the same manner as in this example except that altered PLA films 41 were cut out from the PLA film of Reference Example B12 as a substitute for Reference Example B8. The peel strength was 1.4 $N/mm^2$ at a reaction temperature of the surface-treating of 60°C, was 3.2 $N/mm^2$ at 70°C, and 2.2 $N/mm^2$ at 80°C. Since the reaction time of the surface-treating was 10 minutes which was short, the peel strength was lower than that for the reaction time of 120 minutes. However, the altered PLA films 41 and the aluminum plates 43 could be firmly adhered to each other without a primer (undercoat layer) and an adhesive. Further, although a high peel strength was obtained at any reaction temperature of the surface-treating, the peel strength was the highest when the reaction temperature was 70°C.

Example 7

The PP film which had been subjected to alteration treatment (reaction at room temperature for 10 minutes) in Reference Example B7-2 and the PLA film which had been subjected to alteration treatment (reaction at 70°C for 5 minutes) in Reference Example B8 were each cut into 4 mm in length × 2 mm in width, and then adhered to each other by heat pressing at 50°C and 10 MPa for 5 minutes, thereby producing an adhesion laminate of the PP film and the PLA film. Thus, in this example, the adhesion laminate could be produced by only pressing the PP film and the PLA film without a primer, an adhesive, and the like.

Further, an adhesion laminate was produced in the same manner except that one or both of the PP film and the PLA film was substituted with an unreacted film (which had not been subjected to alteration treatment). Then, the adhesion laminates were subjected to a tensile test in the same manner as in Examples 5 and 6. The results of the tensile test are shown in Table 14 below. In Table 9, "PLA" and "PP" represent unreacted PLA and unreacted PP (which have not been subjected to the surface-treating), respectively. "Oxidized PLA" and "oxidized PP" represent PLA and PP which have been subjected to alteration treatment (which have been subjected to the surface-treating to oxidize each surface), respectively. As shown in Table 9, the adhesion laminate of unreacted PLA and unreacted PP, and the adhesion laminate of oxidized PLA and unreacted PP were extremely weak in adhesive strength and peeled off immediately, and could not be subjected to the tensile test. In contrast, the adhesion laminate of PLA and oxidized PP and the adhesion laminate of oxidized PLA and oxidized PP exhibited a certain peel strength, and thus, it was demonstrated that the adhering could be performed without a primer (undercoat layer) and an adhesive.

Table 14

| Combination | $N/mm^2$ |
|---|---|
| PLA + PP | - |
| Oxidized PLA + PP | - |
| PLA + Oxidized PP | 0.8 |
| Oxidized PLA + Oxidized PP | 1.9 |

Example 8

The surfaces of the polymers (resins) shown in Tables 15 to 17 below were subjected to alteration treatment by the surface-treating according to the present invention, and were then plated with nickel or copper, thereby producing metal-plated polymers. In this example, the surfaces of the polymers were irradiated with light in the surface-treating.

In this example, the surface-treating was performed in the same manner as in Reference Example B1 except that the polymer was changed from the polyethylene plate to polymers shown in Tables 15 to 17. The size of each polymer was also the same as that of the polyethylene plate of Reference Example B1.

In this example, nickel plating after the surface-treating was performed under the same conditions as in Example 1.

In this example, copper plating after the surface-treating was performed as follows. Specifically, first, a film (polymer) which had been oxidized (subjected to the surface-treating) was immersed, for 6 minutes, in a OPC-50 Inducer M solution (trade name, manufactured by Okuno Chemical Industries Co., Ltd.) heated at 45°C, and then immersed, for 5 minutes, in an OPC-150 Cryster RW solution (trade name, manufactured by Okuno Chemical Industries Co., Ltd.) at 25°C, thereby supporting the catalyst on the film. The film was then plated with copper by immersing, for 1 minute, in an ATS Adcopper IW solution (trade name, manufactured by Okuno Chemical Industries Co., Ltd.) at 25°C.

The combinations of the polymers used in this example and the metal (nickel or copper) used for plating are shown in Tables 15 to 17 below. In Tables 15 to 17 below, ○ indicates that peeling was not found in the same cross-cut test as in Example 2, Δ indicates that partial peeling was found in the cross-cut test, but peeling could be performed. This example demonstrated that metal-plated polymers could be produced through plating various polymers by the metal-plated polymer production method according to the present invention.

Table 15

| Polymer | Nickel | Copper |
|---|---|---|
| Acrylonitrile-Butadiene-Styrene Copolymer (ABS) | ○ | ○ |
| Polyacetal (POM) | ○ | ○ |
| Polyethylene (PE) | ○ | ○ |
| Polypropylene (PP) | ○ | ○ |
| Oriented Polypropylene | ○ | ○ |
| Cyclo Olefin Polymer (COP) | ○ | ○ |
| Polyethylene Terephthalate (PET) | ○ | ○ |
| Polyvinyl Chloride (PVC) | ○ | ○ |
| Liquid Crystal Polymer (LCP) | ○ | ○ |

Table 16

| Polymer | Nickel |
|---|---|
| Polycarbonate (PC) | ○ |
| Polylactic Acid (PLA) | ○ |
| Polybutylene Terephthalate (PBT) | ○ |
| Tetrafluoroethylene-Ethylene Copolymer (ETFE) | ○ |

Table 17

| Polymer | Copper |
|---|---|
| Polyphenylene Sulfide (PPS) | ○ |
| 3-Hydroxybutanoic Acid-3-Hydroxyhexanoic Acid Copolymer (PHBH) | ○ |
| Polyetherimide (PEI) | ○ |
| Polyphenylene Ether (PPE) | Δ |

Example 9

Metal-plated polymers with nickel or copper were produced in the same manner as in Example 8 except that the alteration treatment by the surface-treating was performed in the same manner as in Reference Example B14 as a substitute for that of Reference Example B1. In this example, the surfaces of the polymers were not irradiated with light

in the surface-treating.

The combinations of the polymers used in this example and the metal (nickel or copper) used for plating are shown in Tables 18 to 20 below. In Tables 18 to 20 below, ○ indicates that peeling was not found in the same cross-cut test as in Example 2, Δ indicates that partial peeling was found in the cross-cut test, but peeling could be performed. As described above, this example demonstrated that metal-plated polymers could be produced through plating various polymers by the metal-plated polymer production method according to the present invention which is a simple method including the surface-treating without irradiation of the surfaces of the polymers with light, as in Example 8 in which the surfaces of the polymers were irradiated with light.

Table 18

| Polymer | Nickel | Copper |
|---|---|---|
| ABS | ○ | ○ |
| POM | ○ | ○ |
| PE | ○ | ○ |
| PP | ○ | ○ |
| Oriented Polypropylene | ○ | ○ |
| COP | ○ | ○ |
| PET | ○ | ○ |
| PVC | ○ | ○ |
| LCP | ○ | ○ |

Table 19

| Polymer | Nickel |
|---|---|
| PC | ○ |
| PLA | ○ |
| PBT | ○ |
| ETFE | ○ |

Table 20

| Polymer | Copper |
|---|---|
| PPS | ○ |
| PHBH | ○ |
| PEI | ○ |
| PPE | Δ |

Example 10

The surfaces of the polymers (resins) shown in Tables 21 to 26 below were subjected to alteration treatment by the surface-treating according to the present invention, and were then adhered to polymers or metals (adherends) shown in Tables 21 to 26, thereby producing adhesion laminates. In this example, the surfaces of the polymers were irradiated with light in the surface-treating. In Tables 21 to 26 below, "SUS" indicates a stainless steel material.

In this example, the surface-treating was performed in the same manner as in Reference Example B1 except that the polymer was changed from the polyethylene plate to polymers shown in Tables 21 to 26. The size of each polymer was also the same as that of the polyethylene plate of Reference Example B1.

In this example, regarding the adhering after the surface-treating, adhesion between the polymer and the metal

was performed in the same manner as in Example 6, and adhesion between polymers was performed in the same manner as in Example 7. However, only in an example shown in Table 26, the temperature in heat pressing was 70°C.

In Tables 21 to 26 below, ○ indicates that spontaneous peeling was not found after 24 hours of standing still due to firm adhesion, Δ indicates that although the polymer and the metal adhere to each other, spontaneous peeling was found partially after 24 hours of standing still, and × indicates that the polymer and the metal could not adhere to each other. In Tables 21 to 26 below, "Combination of Oxidized Polymers" indicates adhesion of polymers which have been subjected to the surface-treating, and "Combination of Untreated Polymers" indicates adhesion of (untreated) polymers which have not been subjected to the surface-treating. The adhesion of untreated polymers which had not been subjected to the surface-treating was performed under the same conditions as in the adhering of Example 7.

As shown in Table 21 to Table 26 below, this example confirmed that adhesion laminates could be produced through adhering various polymers or adhering various polymers and metals by the adhesion laminate production method according to the present invention. In contrast, as shown in Table 21 to Table 26 below, the adhesive strength between the polymers which had not been subjected to the surface-treating was very weak and could not adhere to each other.

Table 21

| Resin | Metal | |
|---|---|---|
| PP | Al | ○ |
| PP | Ni | ○ |
| PP | Cu | ○ |
| PLA | Al | ○ |
| LCP | Al | ○ |
| LCP | Cu | ○ |
| Polyphenylene Sulfide (PPS) | Al | ○ |
| PET | Al | ○ |
| Polyether Sulfone (PESU) | Al | Δ |
| PE | Stainless Steel (SUS) | ○ |
| Polymethyl Methacrylate (PMMA) | SUS | ○ |
| ABS | SUS | ○ |

Table 22

| Resin | Metal | |
|---|---|---|
| Carbon Fiber Plastic (Carbon Material-Epoxy Resin Composite Material) | Al | ○ |

Table 23

| Resin 1 | Resin 2 | Combination of Oxidized Polymers | Combination of Untreated Polymers |
|---|---|---|---|
| High Density Polyethylene (HDPE) | PE | ○ | × |
| | PP | ○ | × |
| | PVC | ○ | × |
| | Soft PVC | ○ | × |
| | PET | ○ | × |
| | Thermoplastic Elastomer | ○ | Δ |
| | Ethylene-Vinylalcohol Copolymer (EVOH) | ○ | × |

(continued)

| Resin 1 | Resin 2 | Combination of Oxidized Polymers | Combination of Untreated Polymers |
|---|---|---|---|
| PP | PC | ○ | × |
| | PVC | ○ | × |
| | Thermoplastic Polyurethane Elastomer (TPU) | ○ | × |
| | ETFE | ○ | × |
| | PET | ○ | × |
| | EVOH | ○ | × |

Table 24

| Resin 1 | Resin 2 | Combination of Oxidized Polymers | Combination of Untreated Polymers |
|---|---|---|---|
| LCP | LCP | ○ | × |
| | PBT | ○ | × |
| | PPS | ○ | × |
| PBT | PBT | ○ | × |
| | PPS | Δ | × |
| PPS | PPS | ○ | × |
| PA | PVC | ○ | × |
| | Soft PVC | ○ | × |
| | TPU | ○ | × |
| | Thermoplastic Elastomer | ○ | × |
| PPE | Soft PVC | ○ | × |
| | Thermoplastic Elastomer | ○ | × |

Table 25

| Resin 1 | Resin 2 | Combination of Oxidized Polymers | Combination of Untreated Polymers |
|---|---|---|---|
| PVC | PVC | ○ | × |
| | ETFE | ○ | × |
| | Polyamide (PA) | ○ | × |
| | Thermoplastic Elastomer | ○ | × |
| PMMA | PMMA | ○ | × |
| Thermoplastic Elastomer | Thermoplastic Elastomer | ○ | × |
| PET | PET | ○ | × |
| PC | PC | ○ | × |

Table 26

| Resin 1 | Resin 2 | Combination of Oxidized Polymers | Combination of Untreated Polymers | Adhesion Conditions |
|---|---|---|---|---|
| Thermoplastic elastomer | Ethylene-Propylene Rubber (EPDM) | ○ | Δ | 70°C |

Example 11

The surfaces of the polymers (resins) shown in Tables 27 to 32 below were subjected to alteration treatment by the surface-treating according to the present invention, and were then adhered to polymers or metals (adherends) shown in Tables 27 to 32, thereby producing adhesion laminates. In this example, the surfaces of the polymers were not irradiated with light in the surface-treating.

In this example, the surface-treating was performed in the same manner as in Reference Example B14 except that the polymer was changed from the PP film to polymers shown in Tables 27 to 32. The size of each polymer was also the same as that of the PP film of Reference Example B14 described above.

In this example, regarding the adhering after the surface-treating, adhesion between the polymer and the metal was performed in the same manner as in Example 6, and adhesion between polymers was performed in the same manner as in Example 7.

In Tables 27 to 32 below, ○ indicates that spontaneous peeling was not found after 24 hours of standing still due to firm adhesion, Δ indicates that although the polymer and the metal adhere to each other, spontaneous peeling was found partially after 24 hours of standing still, and × indicates that the polymer and the metal could not adhere to each other. In Tables 27 to 32 below, "Combination of Oxidized Polymers" indicates adhesion of polymers which have been subjected to the surface-treating, and "Combination of Untreated Polymers" indicates adhesion of (untreated) polymers which have not been subjected to the surface-treating. The adhesion of untreated polymers which had not been subjected to the surface-treating was performed under the same conditions as in the adhering of Example 7.

As shown in Table 27 to Table 32 below, this example confirmed that adhesion laminates could be produced through adhering various polymers or adhering various polymers and metals by the adhesion laminate production method according to the present invention. In contrast, as shown in Table 27 to Table 32 below, the adhesive strength between the polymers which had not been subjected to the surface-treating was very weak and could not adhere to each other.

Table 27

| Resin | Metal | |
|---|---|---|
| PP | Al | ○ |
| PP | Ni | ○ |
| PP | Cu | ○ |
| PLA | Al | ○ |
| LCP | Al | ○ |
| LCP | Cu | ○ |
| PPS | Al | ○ |
| PET | Al | ○ |
| PESU | Al | Δ |
| PE | SUS | ○ |
| PMMA | SUS | ○ |
| ABS | SUS | ○ |
| Polyamide (PA) | Al | Δ |

Table 28

| Resin | Metal | |
|---|---|---|
| Carbon Fiber Reinforced Plastic (Carbon Material-Epoxy Material Composite Material) | Al | ○ |

Table 29

| Resin 1 | Resin 2 | Combination of Oxidized Polymers | Combination of Untreated Polymers |
|---|---|---|---|
| PE | PE | ○ | × |
| | PP | ○ | × |
| | PVC | ○ | × |
| | Soft PVC | ○ | × |
| | PET | ○ | × |
| | Thermoplastic Elastomer | ○ | × |
| | EVOH | ○ | × |
| | Cellophane | ○ | × |
| | Polyimide (PI) | ○ | × |
| PP | PC | Δ | × |
| | PVC | ○ | × |
| | TPU | ○ | × |
| | ETFE | ○ | × |
| | PET | ○ | × |
| | EVOH | ○ | × |
| | Polyimide (PI) | ○ | × |

Table 30

| Resin 1 | Resin 2 | Combination of Oxidized Polymers | Combination of Untreated Polymers |
|---|---|---|---|
| LCP | LCP | ○ | × |
| | PBT | Δ | × |
| | PPS | ○ | × |
| PBT | PBT | ○ | × |
| | PPS | Δ | × |
| PPS | PPS | ○ | × |
| PA | PVC | ○ | × |
| | Soft PVC | ○ | × |
| | TPU | ○ | × |
| | Thermoplastic Elastomer | ○ | × |
| | Ethylene-Vinylalcohol Copolymer (EVOH) | ○ | × |
| | Cellophane | ○ | × |

(continued)

| Resin 1 | Resin 2 | Combination of Oxidized Polymers | Combination of Untreated Polymers |
|---|---|---|---|
| PPE | Soft PVC | ○ | × |
| | TPU | ○ | × |
| | Thermoplastic Elastomer | ○ | × |

Table 31

| Resin 1 | Resin 2 | Combination of Oxidized Polymers | Combination of Untreated Polymers |
|---|---|---|---|
| PVC | PVC | ○ | × |
| | ETFE | ○ | × |
| | PA | Δ | × |
| | Thermoplastic Elastomer | ○ | × |
| PMMA | PMMA | ○ | × |
| Thermoplastic Elastomer | Thermoplastic Elastomer | ○ | Δ |
| PET | PET | ○ | × |
| | Ethylene-Vinylalcohol Copolymer (EVOH) | ○ | × |
| | Cellophane | ○ | × |
| PC | PC | ○ | × |
| Ethylene -Vinylalcohol Copolymer (EVOH) | PLA | ○ | × |
| | PHBH | ○ | × |
| | PBS | ○ | × |

Table 32

| Resin 1 | Resin 2 | Combination of Oxidized Polymers | Combination of Untreated Polymers |
|---|---|---|---|
| TPU | EPDM | ○ | × |

While the present invention has been described above with reference to exemplary embodiments and examples, the present invention is by no means limited thereto. Various changes and modifications that may become apparent to those skilled in the art may be made in the configuration and specifics of the present invention without departing from the scope of the present invention.

Industrial applicability

As described above, the present invention can provide a surface-treated polymer production method which can be performed in a simplified manner and at low cost, and a polymer, a metal-plated polymer, and an adhesion laminate each of which can be produced in a simplified manner and at low cost. The metal-plated polymer according to the present invention is applicable in various fields such as, for example, fields of transportation materials (automobiles, aircraft), electronic devices, building materials, medical devices, and large structures without particular limitations.

The present application claims priority from Japanese Patent Application No. 2018-096676 filed on May 18, 2018 and Japanese Patent Application No. 2018-096677 filed on May 18, 2018, the entire disclosure of which is incorporated herein by reference.

Reference Signs List

| | |
|---|---|
| 1 | Organic Layer (Organic Phase) |
| 2 | Aqueous Layer (Aqueous Phase) |
| 3 | Gas Phase |
| 4 | Reaction Container |
| 5 | Plate |
| 11A, 111 | Polymer |
| 21, 101 | Acidic Aqueous Hydrochloric Acid ($NaClO_2$) Solution |
| 22, 102, 104 | Reaction Container |
| 23, 103 | Lid |
| 105 | Passage |
| 106 | Air |
| 107 | $ClO_2$ gas |

## Claims

**1.** A method for producing a treated polymer, the method comprising:

reacting a surface of a polymer with a halogen oxide radical to surface-treat the polymer, wherein
the treated polymer is a metal-plated polymer, and the method further includes plating, with a metal, the surface of the polymer after the surface-treating, or
the treated polymer is an adhesion laminate of the polymer and an adherend, and the method further includes adhering the adherend to the surface of the polymer after the surface-treating.

**2.** The method according to claim 1, wherein in the surface-treating, a reaction system is irradiated with light.

**3.** The method according to claim 1 or 2, wherein the reaction system in the surface-treating is either a gas reaction system or a liquid reaction system.

**4.** The method according to claim 1 or 3, wherein the halogen oxide radical is a chlorine dioxide radical.

**5.** The method according to any one of claims 1 to 4, wherein
the polymer is at least one molded body selected from the group consisting of a sheet, a film, a plate, a tube, a pipe, a rod, a bead, a block, a woven fabric, a nonwoven fabric, and a yarn.

**6.** The method according to any one of claims 1 to 5, wherein the polymer is a polyolefin, a polyester, or a polycarbonate.

**7.** The method according to claim 6, wherein the polyester is polylactic acid.

**8.** The method according to any one of claims 1 to 7, comprising
the adhering, wherein
the adherend is a metal.

**9.** A polymer having an oxidized surface, wherein the polymer is a polymer for producing a metal-plated polymer or an adhesion laminate of the polymer and an adherend, and having an amount of change X in contact angle with water represented by the following mathematical formula (1) of more than 0,

$$X = A_0 - A \quad (1)$$

Ao: a contact angle of a non-oxidized surface of the polymer with water;
A: a contact angle of the oxidized surface of the polymer with water;
X: an amount of change in contact angle with water.

**10.** The polymer according to claim 9, being polypropylene, the polymer comprising:
a site having a ratio C = O/C-H satisfying the following condition, the ratio C = O/C-H being a ratio of an area of a peak derived from C = O stretching at 1700 to 1800 $cm^{-1}$ to an area of a peak derived from C-H stretching at 2800 to 3000 $cm^{-1}$ in an infrared absorption spectrum of the oxidized surface.

$$C = O/C\text{-}H > 0$$

**11.** The polymer according to claim 9, wherein the polymer is polyolefin, polyester, or polycarbonate.

**12.** A metal-plated polymer, comprising:
the polymer according to any one of claims 9 to 11, the polymer having a metal-plated surface.

**13.** An adhesion laminate of a polymer and an adherend, the adhesion laminate comprising:

the polymer according to any one of claims 9 to 11; and
the adherend adhered to a surface of the polymer.

**14.** The adhesion laminate of claim 13, wherein the adherend is a metal.

**15.** The adhesion laminate of claim 13 or 14, wherein the adherend is directly in contact with the surface of the polymer.

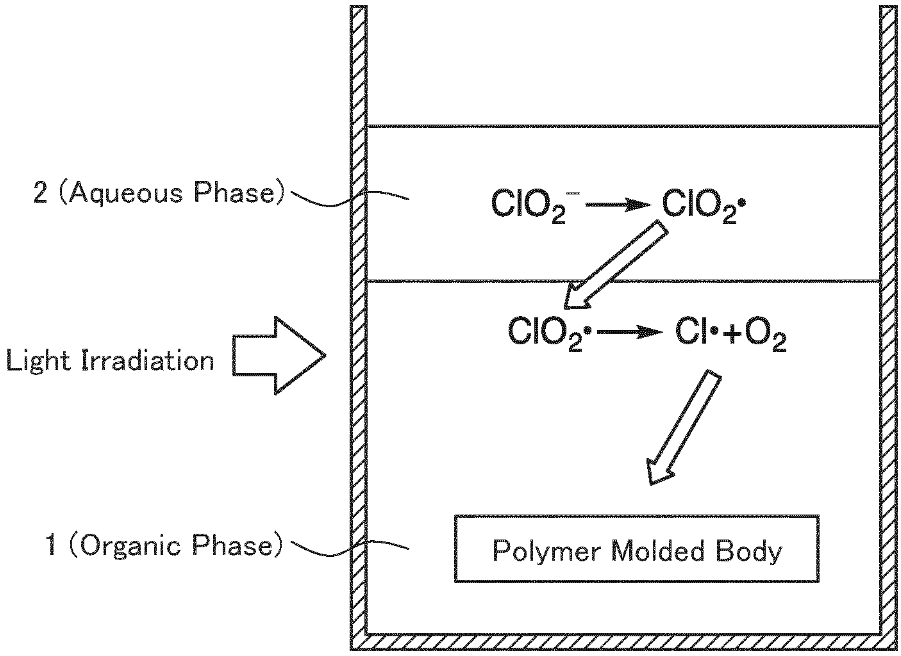
2 (Aqueous Phase)
$ClO_2^- \rightarrow ClO_2\bullet$
Light Irradiation
$ClO_2\bullet \rightarrow Cl\bullet + O_2$
1 (Organic Phase)
Polymer Molded Body

FIG. 1

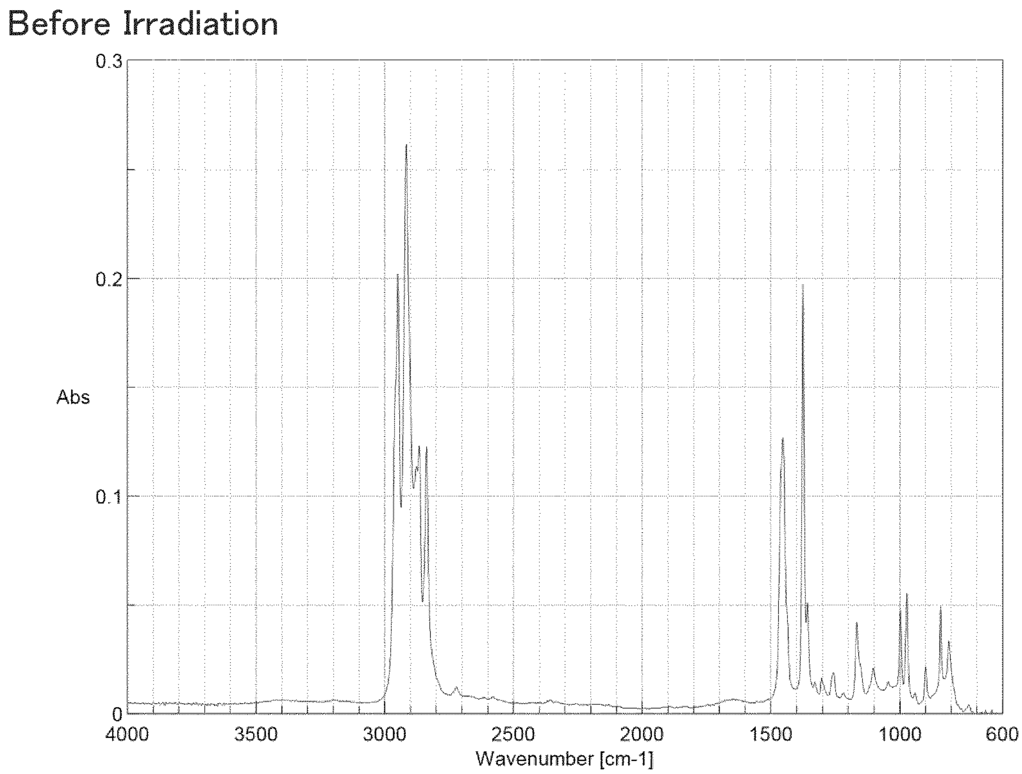
Before Irradiation
0.3
0.2
Abs
0.1
0
4000
3500
3000
2500
2000
1500
1000
600
Wavenumber [cm-1]

FIG. 2A

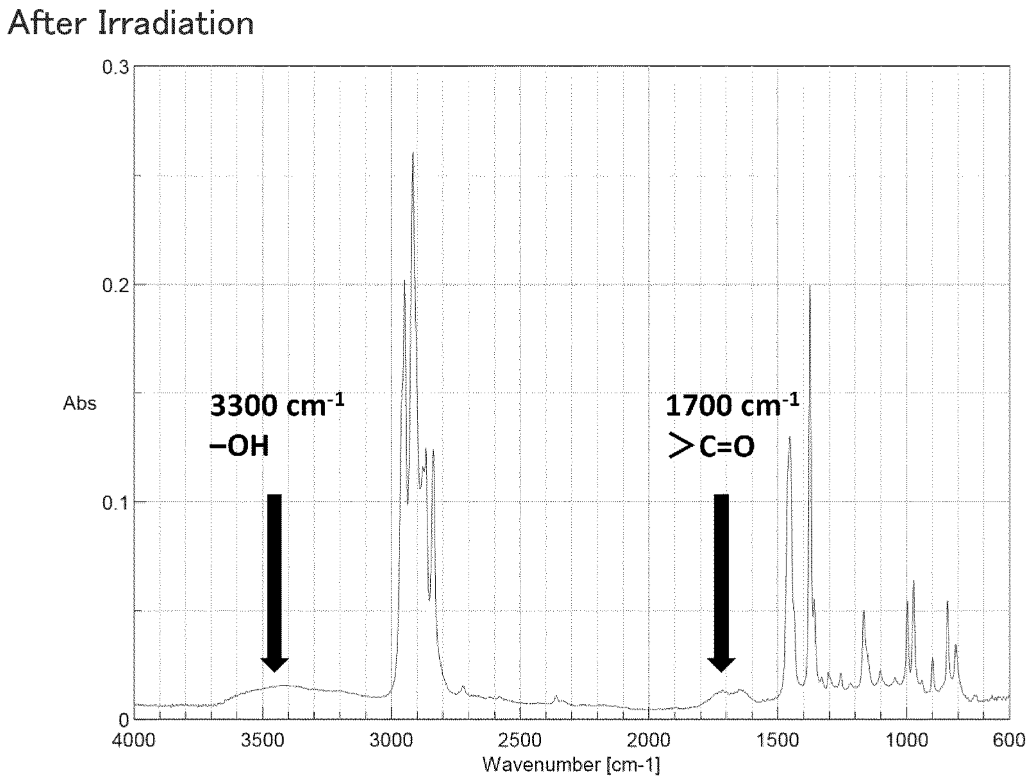
After Irradiation
0.3
0.2
Abs
3300 cm-1
–OH
1700 cm-1
>C=O
0.1
0
4000
3500
3000
2500
2000
1500
1000
600
Wavenumber [cm-1]

FIG. 2B

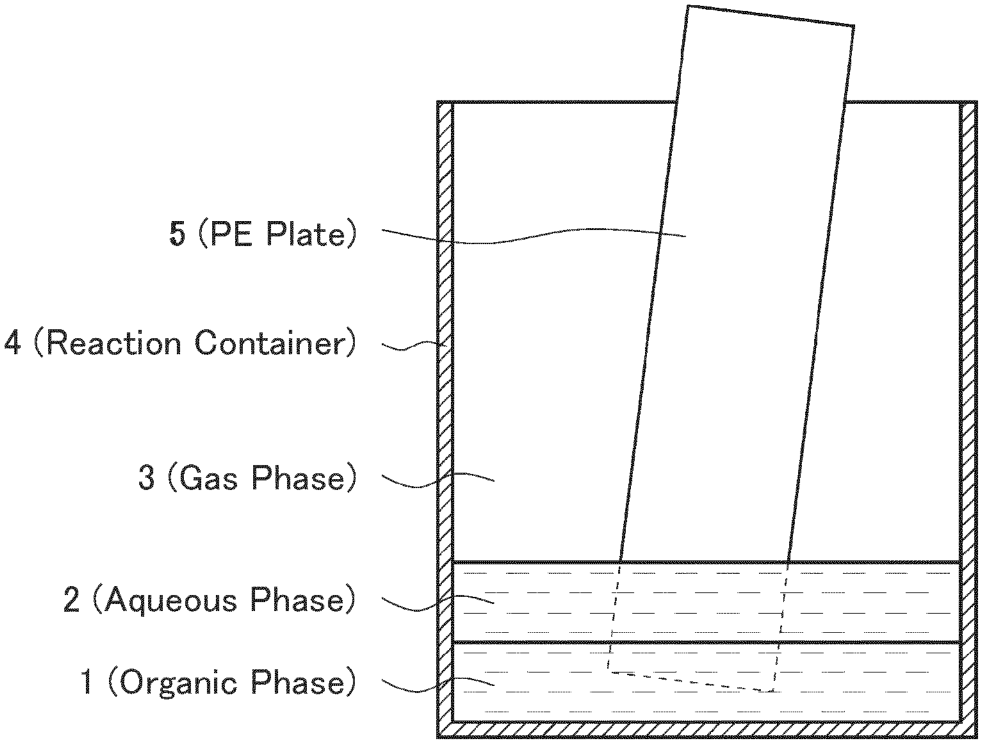
5 (PE Plate)
4 (Reaction Container)
3 (Gas Phase)
2 (Aqueous Phase)
1 (Organic Phase)

FIG. 3

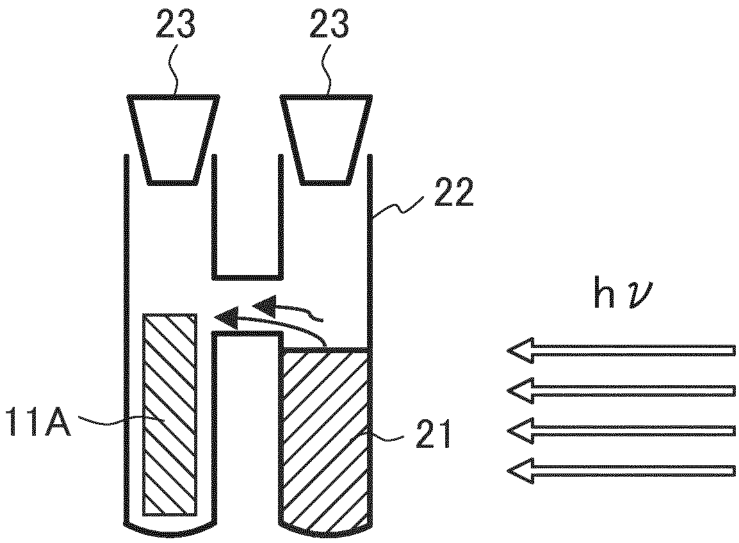
23
23
22
hν
11A
21

FIG. 4

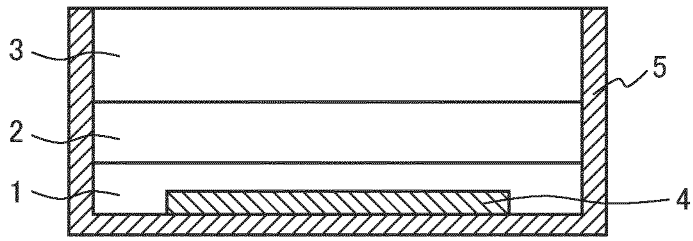


FIG. 5A

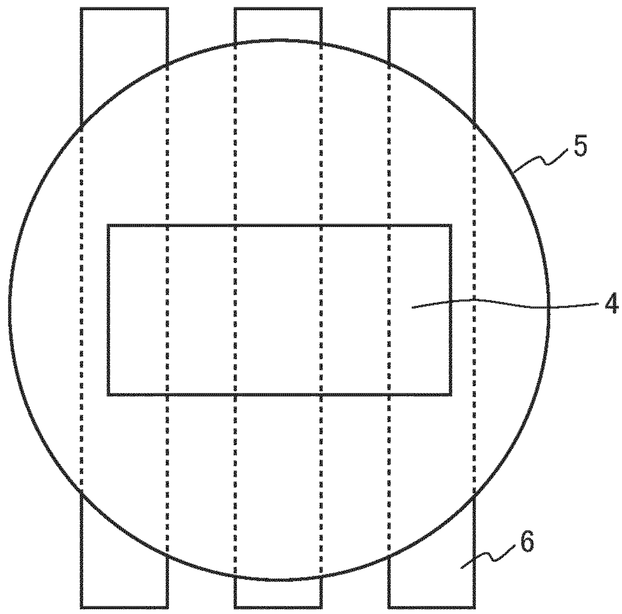


FIG. 5B

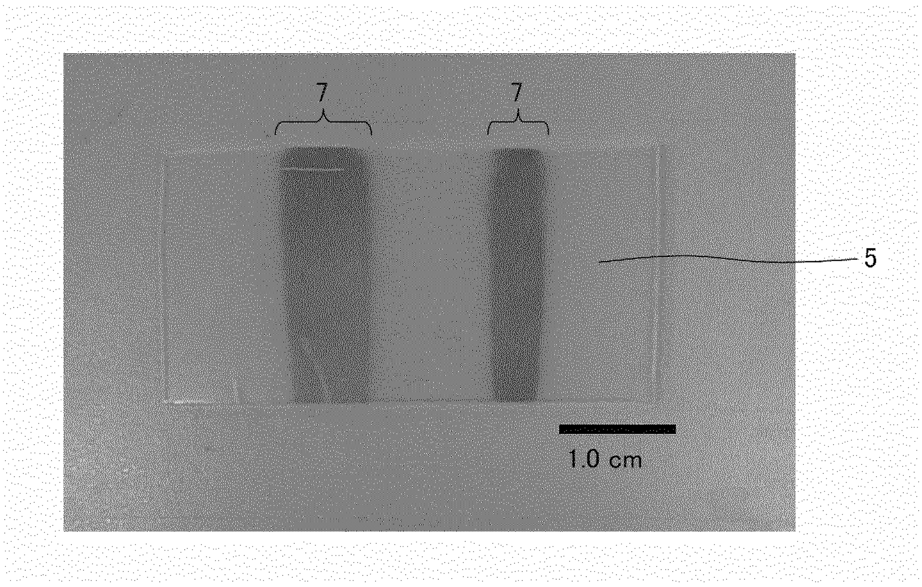


FIG. 6

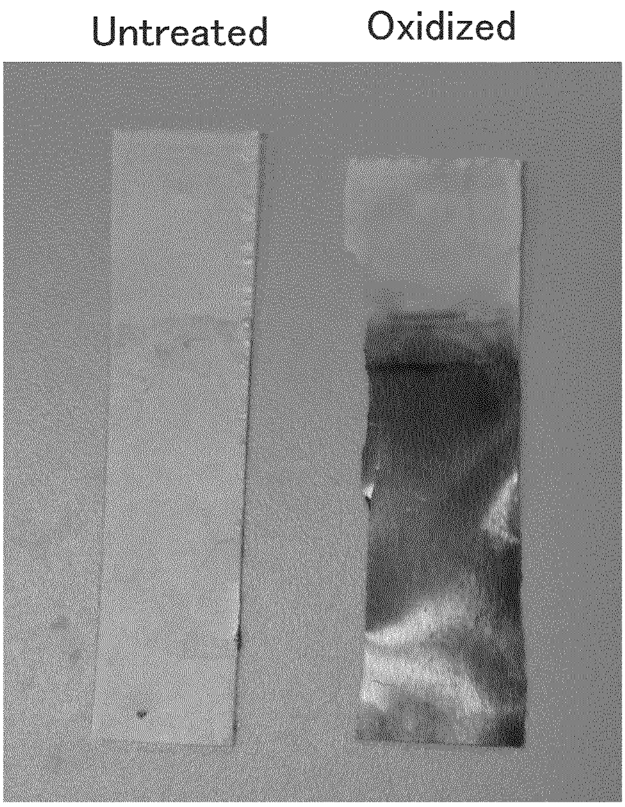


FIG. 7

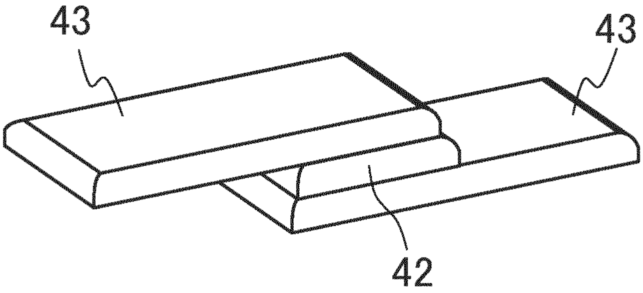


FIG. 8

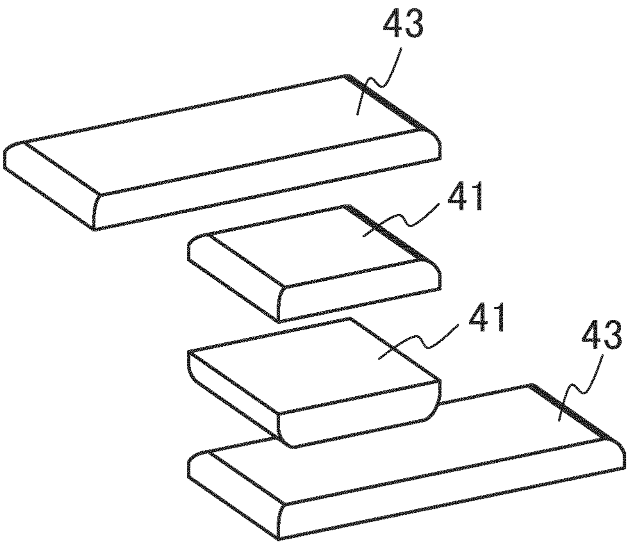


FIG. 9

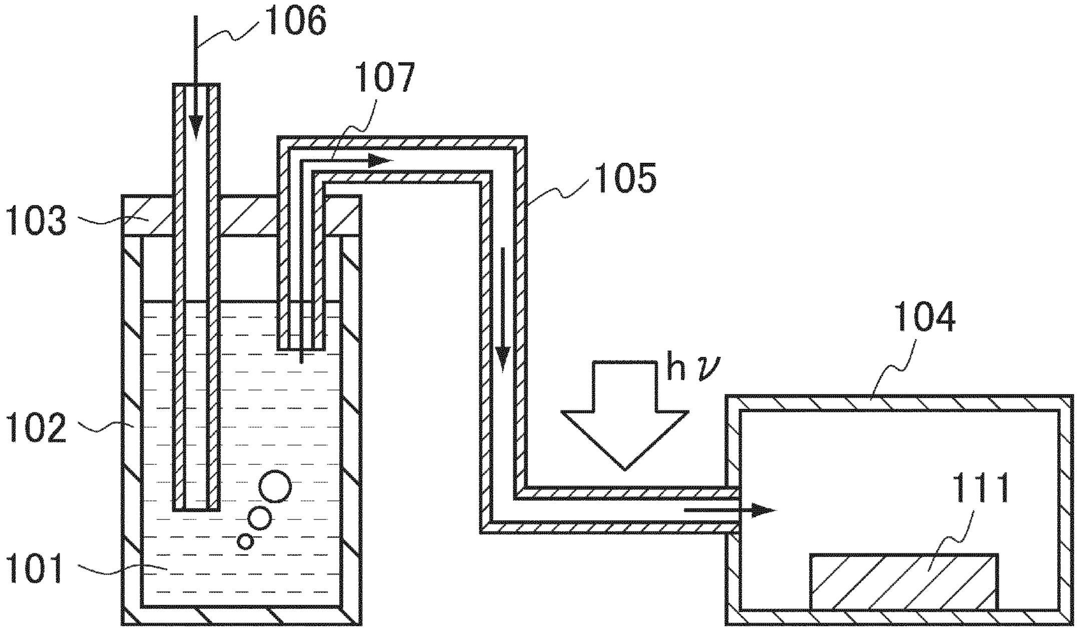


FIG. 10

## INTERNATIONAL SEARCH REPORT

International application No.
PCT/JP2019/019815

A. CLASSIFICATION OF SUBJECT MATTER
Int.Cl. C08J7/00(2006.01)i, C08J7/04(2006.01)i, C23C18/20(2006.01)i

According to International Patent Classification (IPC) or to both national classification and IPC

B. FIELDS SEARCHED

Minimum documentation searched (classification system followed by classification symbols)
Int.Cl. C08J7/00-7/18, B29C71/04, C23C18/00-20/08

Documentation searched other than minimum documentation to the extent that such documents are included in the fields searched

| | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 03-103448 A (MITSUI TOATSU CHEM INC.) 30 April 1991, claims, page 1, lower left column, lines 13-17, examples (Family: none) | 9-15<br>10-15 |
| X<br>Y | JP 2013-166107 A (NAKAJIMA KOGYO KK) 29 August 2013, paragraphs [0002]-[0004] (Family: none) | 9, 12<br>10-15 |
| X<br>Y | JP 2003-025506 A (ASAHI KASEI CORPORATION) 29 January 2003, claims, paragraphs [0004], [0015]-[0018], examples (Family: none) | 9, 12-15<br>12 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 13.08.2019 | 27.08.2019 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2019/019815

C (Continuation). DOCUMENTS CONSIDERED TO BE RELEVANT

| Category* | Citation of document, with indication, where appropriate, of the relevant passages | Relevant to claim No. |
|---|---|---|
| Y | JP 06-340759 A (TOKAI UNIVERSITY) 13 December 1994, claims, paragraphs [0003]-[0005], [0013]-[0020], examples & US 6117497 A, column 7, line 59 to column 8, line 54 & WO 1994/021715 A1 & EP 644227 A1 | 1-15 |
| Y | WO 2017/104798 A1 (ACENET INC.) 22 June 2017, paragraphs [0155]-[0159], [0166], [0188] & EP 3398925 A1, paragraphs [0133]-[0138], [0144], [0161] & CN 108602740 A | 1-15 |
| P, X | WO 2018/110710 A1 (ACENET INC.) 21 June 2018, claims, paragraphs [0002], [0058] (Family: none) | 1-15 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2008247962 A
- JP 2010046952 A
- JP 2012251038 A
- JP 2013091702 A
- JP 2018096676 A
- JP 2018096677 A